(19) Europäisches Patentamt
European Patent Office
Office européen des brevets

(11) **EP 4 112 692 B1**

(12) **EUROPEAN PATENT SPECIFICATION**

(45) Date of publication and mention
of the grant of the patent:
**17.04.2024 Bulletin 2024/16**

(21) Application number: **21183367.8**

(22) Date of filing: **02.07.2021**

(51) International Patent Classification (IPC):
**C09D 5/00** *(2006.01)*

(52) Cooperative Patent Classification (CPC):
**C09D 5/00; C09D 5/16**

(54) **COMPOSITION FOR THE PROTECTION AGAINST CORROSION OF AN ARTICLE AND PROCESS FOR PROTECTION THEREOF**

ZUSAMMENSETZUNG FÜR DEN KORROSIONSSCHUTZ EINES GEGENSTANDES UND VERFAHREN ZUM SCHUTZ DESSELBEN

COMPOSITION POUR LA PROTECTION CONTRE LA CORROSION D'UN ARTICLE ET PROCÉDÉ DE PROTECTION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.01.2023 Bulletin 2023/01**

(73) Proprietor: **Seal for Life Global Dutch Holding B.V. 9503 JB Stadskanaal (NL)**

(72) Inventors:
• **BROESDER, Hindrik Harm**
  **9503 JB Stadskanaal (NL)**

• **SCHUTTE, Jan Otto**
  **9503 JB Stadskanaal (NL)**
• **CUDIC, Dinko**
  **9503 JB Stadskanaal (NL)**
• **SALEHPOUR, Somaieh**
  **9503 JB Stadskanaal (NL)**

(74) Representative: **Jones Day
Rechtsanwälte, Attorneys-at-Law, Patentanwälte
Prinzregentenstrasse 11
80538 München (DE)**

(56) References cited:
**EP-A1- 1 022 316    WO-A1-2014/011051**

**Description**

**1. FIELD OF THE INVENTION**

The invention relates to the protection against corrosion of an article in a dry, moist, wet, immersed or submerged environment, in particular, oil or gas pipes or lines and risers of oil drilling and production rigs and platforms. The invention particularly relates to a composition for the protection against corrosion of an article. The invention also relates to tapes and articles comprising the composition of the invention, and processes for the protection against corrosion of said article.

**2. BACKGROUND OF THE INVENTION**

Articles in a dry, moist, wet, immersed or submerged environment, such as, *e.g.*, sweating pipelines, submerged oil lines or pipes, gas lines or pipes, transport pipes and risers of drilling and production rigs or platforms and platform legs are subject to corrosion or deterioration above, at, and below the water line. These articles may be subject to deterioration or damage by water, corrosive pollution, cycles of wetting and drying, cycles of freezing and thawing and electrolysis. Erosion, marine organisms, mechanical impact, water content and abrasion may also cause premature failures of even properly designed articles. It is thus necessary to protect such articles against damage and/or deterioration.

The anticorrosion treatments, which have been carried out hitherto, use quasi-manual techniques. The most widely practiced solution consists in utilizing the services of divers, who, under several meters or tens of meters of water, manually coat the elements to be treated with, *e.g.*, paints, resins or mastics. Such techniques, which are practiced under difficult conditions, are very expensive, hazardous, and often rather unsatisfactory in terms of their effectiveness.

In addition to the adverse effects due to corrosion, submerged articles suffer the consequences of various mechanical stresses such as, *e.g.*, gravity, the repeated impact of the waves, the pressure of underwater currents or the traction on anchorage points. Offshore drilling and production platforms and platform legs, in particular the risers, are relatively sensitive structures in this respect by virtue of their construction and their exposure to the natural elements.

Methods for anti-corrosion protection of structures in a marine environment and/or partly or wholly submerged structures are known in the art, wherein an encasing is used together with a corrosion inhibiting substance such as a curable polymer composition.

US 4892410 discloses a jacket construction, wherein a curable two-component polymer composition is injected and after which the polymer composition is cured.

US 5049005 discloses a device for protecting branch girder joints against corrosion.

US 5226751 discloses a process wherein a jacket is placed around a pile, which is then injected with air and preheated gas to dry the pile. In a subsequent step, the jacket is filled with an expanding closed cell form formed from liquid chemicals or epoxy resins.

US 5591265 discloses a formwork, preferably comprising a tubular elongated member, wherein a curable resin material is injected between the annular space that is present between the metal article to be protected and the wall of the formwork.

The disadvantage of methods such as disclosed in US 4892410, US 5049005, US 5226751 and US 5591265 is that cured, rigid polymer compositions are used, which generally have poor adhesion properties to the surface of metal articles. Moreover, such polymer compositions provide a hard seal that may split or tear under the influence of mechanical stress, *e.g.*, wave actions. Another disadvantage of these materials, which may comprise, for example, epoxy resins, is that they are generally harmful to the environment. Cured, rigid polymers are also not easily removed from the metal article even though easy removal is important when repairs, replacements or inspections have to be carried out. A number of methods that can be used to protect a pipe against corrosion or other types of damage are known in the art.

EP 1644433 discloses an improved apolar, non-thermosetting, fluid polymer composition. Although this composition may be used under humid conditions, no condensation of water may occur on the surface of the article to be protected while said composition is applied.

EP 0751198 relates to the use of a non-thermosetting, fluid polymer composition for protecting underground metal articles against corrosion, wherein the metal articles are in contact with moisture. Polymers comprising polyisobutene and/or poly(oxydimethylsilylene), which have a viscosity of between 60000 and 1200000 cSt (60 to 1200 Pa.s) at 20 °C, are advantageously used. The preparation may contain one or more fillers. The preparation may also contain one or more products that have been obtained directly from petroleum. The apolar, non-thermosetting, fluid polymer composition may be used to protect risers of oil drilling platforms, steel components and pipelines that are submerged in seawater. However, during the application of the composition, it is necessary that the surface of the riser, steel component or pipeline is essentially dry in order to achieve sufficient adhesion of the composition to the surface.

EP 0826817 discloses a band-like covering for the sealed covering of structures. The covering comprises a base and a kneadable material, such as a paste, which may comprise a liquid polymer that is non-polar and does not cure, for example, petroleum products. Preferably, polymers comprising polyisobutene and/or poly(oxydimethylsilylene), which have a viscosity between 60000 and 1200000 cSt (60 to 1200 Pa.s) at 20 °C, are used. The product may comprise one or more fillers. The product may also comprise one or more products, which are obtained directly or indirectly from petroleum, such as, for example, bituminous products, or paraffin-like products such as vaseline and wax. The covering may be used in the off-shore industry, but during application of the covering the surface of the structure should be essentially dry in order to achieve sufficient adhesion of the covering to the surface.

Compositions generally known in the art for the corrosion protection of fully submerged articles normally comprise wax, petrolatum and bentonite, and can be applied to the surface of an article, while the article is submerged. A disadvantage of such compositions is that the range of operation is insufficient for certain applications. The operating temperature of such compositions is generally in the range of about -20 °C to about 35 °C, although under certain conditions a maximum operating temperature of about 45 °C can be achieved. At temperatures higher than about 45 °C the compositions become more liquid and do not sufficiently adhere to the surface of the article and drip off the surface. In addition, at temperatures above about 45 °C a phase separation may occur. Due to the relatively low maximum operating temperature, said compositions are not suitable for the protection of articles that are not submerged, *e.g.*, those parts of partly submerged articles that are situated above the water level, or sweating pipelines. As a result, two different corrosion protecting compositions are needed for an article that is partly submerged: a composition for the protection of the submerged parts (*i.e.,* the parts situated under water) and a different composition for those parts that are situated above the water.

US 4558875 discloses an aqueously-swelling water stop composition consisting of 10 to 40 percent by weight (wt.%) of rubber with polyisobutylene, 10 to 20 wt.% of silicate, 10 to 60 wt.% of bentonite, said silicate and bentonite acting as fillers, and 10 to 40 wt.% of plasticizer. The polyisobutylene preferably has a Staudinger molecular weight $M_s$ of 70,000 to 130,000, corresponding to a viscosity average molecular weight $M_v$ of about 840,000 to about 2,220,000 g mol$^{-1}$. Preferred polyisobutenes are Vistanex® L-80, Vistanex® L-100 and Vistanex® L-140, having a viscosity average molecular weight of about 750,000 to 2,350,000 g mol$^{-1}$. The water stop composition may be extruded into an elongated water stopper that can be inserted in, *e.g.*, a joint gap to stop water at the gap. US 4558875 remains silent about corrosion prevention.

US 5663230 discloses water stop compositions that exhibit a controlled swelling or volumetric expansion upon immersion in water. An exemplary water stop composition comprises about 10 to 30 wt.% elastomer blend, about 15 to 30 wt.% filler, about 20 to 40 wt.% plasticizer, and about 25 to 35 wt.% water swellable bentonite clay. The elastomer blend comprises 50 to 60 wt.% thermoplastic elastomers (TPE), 10 to 20 wt.% of a cross-linked butyl rubber and 20 to 40 wt.% of polyisobutene. Water stop compositions comprising 6.10 to 6.24 wt.% polyisobutene are disclosed. US 5663230 remains silent about corrosion prevention.

EP 2872554 discloses a process for the protection against corrosion of an article in a wet environment and further discloses a composition for the protection against corrosion of an article in a wet environment. An exemplary composition comprises an amorphous polymer composition having a glass transition temperature of -20 °C or less and a water-absorbing filler having a water-absorption of 20 wt.% or higher. The composition comprises 20 to 80 wt.% of the amorphous polymer composition based on the total weight of the composition, wherein the amorphous polymer has a number average molecular weight $M_n$ in the range of 1,000 to 150,000 g mol$^{-1}$. EP 2872554 also relates to a tape, comprising said composition and an article that comprises a layer of the corrosion protecting composition and a mechanical protective layer.

WO 2014/011051 describes a process for the protection against corrosion and a corresponding corrosion protecting composition. The disclosed corrosion protecting composition comprises (i) an amorphous polymer composition comprising an amorphous polymer having a glass transition temperature of -20 °C or less and (ii) a water-absorbing filler. EP 1 022 316 discloses an ink receiving layer comprising a radiation-curable composition comprising a monofunctional acrylic monomer, a multifunctional acrylic monomer, a water-absorbing organic filler and a water-absorbing inorganic filler

In the art, there is a need for a material for the protection of articles against corrosion that can be applied above and under water. This means that there is an unmet need for a material that can be applied in dry, moist, wet, immersed or submerged environments to minimize the risk of corrosion. Such a material should form an effective barrier against oxygen and water. Further, there is also the need for a material that can be used at higher temperatures than the material known in the art having a broad range of operating temperatures. There is also a need for a material that is easy to apply to the articles to be protected, and that can be applied while the articles are in a dry, moist, wet, immersed and/or submerged environment. Preferably, the material can be applied in a dry, moist, wet, immersed and/or submerged environment without the need for extensive pre-treatment of the article to be protected.

## 3. SUMMARY OF THE INVENTION

Described herein are compositions for the protection against corrosion, processes for the protection against corrosion, and articles and tapes comprising compositions of the invention.

In a first aspect, the present invention provides a composition for the protection against corrosion of an article, said composition comprising (i) an amorphous polymer composition comprising an amorphous polymer having a glass transition temperature of -20 °C or less as determined by differential scanning calorimetry (DSC) and wherein the amorphous polymer has an average molecular weight in the range of 1,000 to 3,050,000 g mol$^{-1}$ as determined by gel permeation chromatography, (ii) one or more water-absorbing filler having a water-absorption of 20 wt.% or higher as determined according to the procedure described in standard EN-ISO 10769:2011, wherein the one or more water-absorbing filler comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises (a) at least 30 wt.% of the non-polymeric water-absorbing filler, and optionally (b) at least 0.1 wt.% of a polymeric water-absorbing filler, based on the total weight of the composition.

In as second aspect provided herein is a tape, comprising a layer comprising the corrosion protecting composition of the invention.

The present invention also provides an article comprising (a) (i) a layer of a corrosion protecting composition of the invention on a surface of the article and (ii) a mechanical protective layer to protect said layer of said corrosion protecting composition; or (b) the tape of the invention.

The present invention also provides a process for the protection against corrosion of an article, comprising, in the following order, the steps of: (a) applying a layer of the corrosion protecting composition of the invention or the tape of the invention; and (b) applying a mechanical protective layer on top of the layer of said corrosion protecting composition or said tape, wherein the article is in a dry, moist, wet, immersed or submerged environment during the application of the layer of the corrosion protecting composition of the invention or the tape of the invention.

The present invention solves all of the problems associated with the prior art and in particular shows that the compositions provided herein can be readily applied on moist, wet and dry surfaces and have improved physical properties such as decreased water-absorbing characteristics and an increased viscosity. Further, the composition provided herein have good thermal stability. In addition, the composition of the invention has good compatibility with cathodic protection systems and does not comprise substances that are harmful to the environment. The composition is also easy to install, inspect and repair. The composition of the invention has excellent adhesion to various types of substrates like carbon steel and alloy steel, and to existing coatings like neoprene, epoxies, and polyolefins. The composition can be applied on substrates that are wetted or immersed in various types of water like very pure water from condensation, fresh water, and seawater at temperatures ranging from above freezing point to Tmax.

## 4. DETAILED DESCRIPTION OF THE INVENTION

The verb "to comprise" and its conjugations as used in this description and in the claims are used in their non-limiting sense to mean that items following the word are included, but items not specifically mentioned are not excluded.

Reference to an element by the indefinite article "a" or "an" does not exclude the possibility that more than one of the element is present, unless the context clearly requires that there is one and only one of the elements. The article "a" or "an" usually means "at least one".

Encompassed in this description are also all possible combinations of embodiments, even if disclosed as separate embodiments.

The term "average molecular weight" used herein may refer to the "number average molecular weight ($M_n$)", "viscosity average molecular weight ($M_v$)", or "weight average molecular weight ($M_w$)".

The term "polymer" includes homopolymers and copolymers.

The term "copolymer" includes polymers comprising two or more different monomers.

The term "poly-alkene" refers to polymers comprising at least an alkene monomer.

Commonly, a skilled person uses the term "polyisobutene" in a general manner when referring to an amorphous polymer comprising isobutene monomers as a major component, and optionally further monomers, such as 1-butene, 2-butene and/or butadiene. These amorphous polymers have similar properties, in particular in terms of glass transition temperatures and surface tension. Depending on the desired purity of the polyisobutenes, they may be prepared by various methods (*cf.* Ullmanns "Encyclopädie der technischen Chemie", 4th Ed., Vol. 19, pages 216 - 223, 1980, and Vol. 13, pages 621 - 623, 1977). The term "polyisobutene" includes polymers that comprise isobutene monomers in amounts such as at least about 50 wt.%, at least about 75 wt.%, at least about 90 wt.% or at least about 95 wt.%, and a monomer selected from the group consisting of $C_2$ - $C_{12}$ alkenes, $C_4$ - $C_{12}$ alkadienes, and mixtures thereof in amounts such as about 50 wt.% or less, about 25 wt.% or less, about 10 wt.% or less or about 5 wt.% or less, calculated on the total weight of the polyisobutene. As such, according to the general common use, the term "polyisobutene" encompasses polymers such as polybutenes and essentially non-cross-linked butyl rubbers as described below. In the present application, the term "polyisobutene" is used for an isobutene polymer as defined above.

The term "polyisobutene homopolymer" is used herein in order to distinguish polyisobutenes having a very high isobutene monomer content from, for example, polyisobutenes having a lower isobutene monomer content as described above, and from polybutenes and butyl rubbers as described below. Thus, the term "polyisobutene homopolymer" as used herein refers to a polymer consisting essentially of isobutene monomers, *i.e.*, a polymer comprising more than about 98 % to about 100 % isobutene, preferably about 99 % to about 100 %, more preferably about 99.5 % to about 100 %, even more preferably about 99.7 % to about 100 %, and in particular about 99.9 % to about 100 %, all by weight of isobutene, based on the total weight of the polymer.

The term "polybutene" used herein refers to a polymer prepared from a $C_4$-fraction obtained from the oil refining process (such as a $C_4$-fraction comprising 1-butene, 2-butene, isobutene and optionally butadiene).

The term "butyl rubber" refers to a polymer of about 95 wt.% to about 98 wt.% isobutene and about 2 wt.% to about 5 wt.% isoprene, based on the total weight of the polymer.

The term "water-absorbing filler" is defined as a material that is able to absorb water and that is suitable for use as a filler material. "Water-absorbing filler" comprises all fillers that bind water by chemical, irreversible reaction or by physical, reversible reaction. The water-absorbing filler may be polymeric or non-polymeric. Calcium carbonate ($CaCO_3$) is not a water-absorbing filler according to the definition of the invention.

The term "water-absorption of a filler" or "water-absorption" is herein defined as the amount of water that is absorbed, bound and/or stored in relation to the dry mass of a filler in a certain amount of time and includes binding of water by physical, reversible reaction or by chemical, irreversible reaction. In the former case, the water can be released again under specific circumstances, wherein in the latter case the water is permanently fixed. The water-absorption ($w_A$) is expressed as the ratio of the mass of water absorbed by the dry filler specimen in a certain time ($m_{wg}$), to the dry mass of the filler specimen ($m_d$). The water-absorption is expressed as the proportion by mass, in wt.%.

$$w_A = \frac{m_{wg}}{m_d} \times 100 \%$$

The term "filler" as used herein refers to water-absorbing and non-water-absorbing (inert) fillers. Water-absorbing fillers can be any filler, including organic and/or inorganic fillers. Polymeric fillers may be any type of polymeric filler used in the art. The water-absorbing filler may comprise a swellable filler, *i.e.,* a filler that expands when it is moist or wet.

The term "mechanical protective layer" refers to a layer that protects the underlying layer or layers mechanically from external effects.

## 4.1 THE AMORPHOUS POLYMER

The amorphous polymer is preferably a hydrocarbonaceous polymer. The hydrocarbonaceous polymer is optionally (partly) halogenated, preferably by bromine, chlorine or fluorine. It is preferred that the hydrocarbonaceous polymer is essentially non-vulcanised (non-cross-linked) so that its cold flow properties are optimised. The amorphous polymer may comprise one or more different amorphous polymers. For example, the amorphous polymer may be a blend of two or more different amorphous polymers.

The amorphous polymer may comprise a polymer that is of low-molecular weight. The amorphous polymer may comprise a polymer that is of mid-molecular weight. The amorphous polymer may comprise a polymer that is of high-molecular weight. The number average molecular weights and molecular weight distributions can be determined by gel permeation chromatography (GPC) as is well known in the art.

The average molecular weight may be indicated as the number average molecular weight ($M_n$). In one embodiment, the amorphous polymer has a number average molecular weight $M_n$ of 1,000 to 2,000,000 g mol$^{-1}$. In one embodiment, the number average molecular weight $M_n$ is within the range of 1,050 to 1,950,000 g mol$^{-1}$. In one embodiment, the amorphous polymer has a number average molecular weight $M_n$ in the range of 1,500 to 1,000,000, more preferably within the range of 2,000 to 600,000, even more preferably in the range of 2,500 to 250,000 and in particular within the range of 15,000 to 100,000 g mol$^{-1}$. In one embodiment, the number average molecular weight $M_n$ of the amorphous polymer is at least 1,000, at least 5,000, at least 10,000, at least 15,000, or at least 235,000 g mol$^{-1}$.

In one embodiment, the amorphous polymer has a number average molecular weight $M_n$ of 1,000 to 2,300 g mol$^{-1}$. In specific embodiments, the number average molecular weight $M_n$ of the amorphous polymer is 1,000, 1,300, 1,500, 1,800, or 2,300 g mol$^{-1}$. In another embodiment, the amorphous polymer has a number average molecular weight $M_n$ of 16,500, 21,000, or 33,700 g mol$^{-1}$. In one embodiment, the amorphous polymer has a number average molecular weight $M_n$ of 235,000, 437,000, 534,000, or 2,000,000 g mol$^{-1}$.

The average molecular weight may be indicated as the viscosity average molecular weight ($M_v$). In one em-

bodiment, the amorphous polymer has an viscosity average molecular weight $M_v$ of 40,000 to 2,600,000 g mol$^{-1}$. In one embodiment, the amorphous polymer has a viscosity average molecular weight $M_v$ of 60,000 to 1,000,000 g mol$^{-1}$. In one embodiment, the amorphous polymer has a viscosity average molecular weight $M_v$ of 70,000 to 800,000 g mol$^{-1}$. In one embodiment, the amorphous polymer has a viscosity average molecular weight $M_v$ of 85,000 to 425,000 g mol$^{-1}$. In one embodiment, the amorphous polymer has a viscosity average molecular weight $M_v$ of 40,000 to 85,000 g mol$^{-1}$. In one embodiment, the amorphous polymer has a viscosity average molecular weight $M_v$ of 50,000 to 80,000, more preferably of 60,000 to 70,000 g mol$^{-1}$. In specific embodiments, the viscosity average molecular weight $M_v$ of the amorphous polymer is 40,000, 47,000, 55,000, 65,000, 73,000, or 85,000 g mol$^{-1}$. In one embodiment, the viscosity average molecular weight is 40,000. In one embodiment, the viscosity average molecular weight $M_v$ is about 425,000 to 2,600,000 g mol$^{-1}$. In one embodiment, the viscosity average molecular weight is about 600,000 to 2,000,000, more preferably about 1,000,000 to 1,500,000 g mol$^{-1}$. In specific embodiments, the viscosity average molecular weight is 425,000, 800,000, 1,110,000, or 2,600,000 g mol$^{-1}$.

The average molecular weight may be indicated as the weight average molecular weight ($M_w$) (expressed in equivalents of PS). In one embodiment, the amorphous polymer has a weight average molecular weight $M_w$ of 1,000 to 3,050,000. In one embodiment, the amorphous polymer has a weight average molecular weight $M_w$ of 53,000 to 3,000,000. In one embodiment, the amorphous polymer has a weight average molecular weight $M_w$ of 70,000 to 1,600,000. In one embodiment, the amorphous polymer has an average molecular weight $M_w$ of 100,000 to 1,000,000. In one embodiment, the amorphous polymer has a weight average molecular weight $M_w$ of 53,000 to 108,000. In specific embodiments, the amorphous polymer has a weight average molecular weight $M_w$ of 53,000, 70,000, or 108,000. In one embodiment, the amorphous polymer has a weight average molecular weight $M_w$ of 565,000 to 3,050,000. In specific embodiments, the amorphous polymer has a weight average molecular weight $M_w$ of 565,000, 1,050,000, 1,550,000, or 3,050,000.

Also encompassed by the present invention is an amorphous polymer that can be described by any combination of the above-mentioned ranges of number average molecular weight ($M_n$), viscosity average molecular weight ($M_v$), and/or weight average molecular weight ($M_w$). For example, in one embodiment, the amorphous polymer has an average molecular weight of about 1,000 to about 3,050,000. In one embodiment, the amorphous polymer has an average molecular weight of about 1,300 to about 2,600,000, more preferably of about 1,500 to about 1,550,000, and even more preferably of about 2,300 to about 1,050,000.

Preferably, the molecular weight distribution $M_w/M_n$ of the amorphous polymer is about 1 to 10, more preferably about 1 to 5, even more preferably about 1 to 4 and most preferably about 1.5 to 3.5.

The amorphous polymer has a glass transition temperature $T_g$ of less than about -20 °C, preferably less than about -30 °C, more preferably less than about -40 °C, even more preferably less than about -50 °C and most preferably less than about - 60 °C. It is preferred that the amorphous polymer has a surface tension of less than about 50 mN/m at 20 °C, preferably less than about 40 mN/m at 20 °C. The glass transition temperature(s) can be determined by differential scanning calorimetry (DSC) known in the art. The surface tension can be determined by methods known in the art (*cf.* S. Wu, J. Colloid. Interface. Sci. 31, 153, 1969; D.G. LeGrand, G.L. Gaines, Jr., J. Colloid. Interface Sci. 31, 162, 1969).

It is preferred that the amorphous polymer is a poly-alkene. Preferred monomers for manufacturing the amorphous polymer are monomers selected from the group consisting of $C_2$ - $C_{12}$ alkenes, $C_4$ - $C_{12}$ alkadienes, and mixtures thereof, wherein the alkene and/or alkadiene may be substituted with one or more bromine, chlorine or fluorine atoms. The alkene may be an $\alpha$-alkene or an internal alkene. The diene may be conjugated or non-conjugated.

Preferably, the $C_2$ - $C_{12}$ alkene is selected from the group consisting of ethene, propene, 1-butene, 2-butene, isobutene (2-methyl propene), 1-pentene, 1-hexene, 2-methyl-1-pentene, 4-methyl-1-pentene, 1-octene, and mixtures thereof.

Preferably, the $C_4$ - $C_{12}$ alkadiene is selected from the group consisting of butadiene, isoprene (2-methyl-1,3-butadiene), 2,4-dimethyl butadiene, penta-1,3-diene, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methyl cyclopentadiene, cyclohexadiene, 1-vinyl-cyclohexadiene, norbornadiene, 5-ethylidene-2-norbornene, divinylbenzene, dicylopentadiene, 1,4-hexadiene, 5-vinyl-2-norbornene, and mixtures thereof.

Amorphous polymers having a glass transition temperature of less than about -20 °C are well known in the art and are disclosed, for example, in Kirk-Othmer, Encyclopedia of Chemical Technology, 4th Ed., Vol. 8, pages 905 - 1093, 1993, and 4th Ed, Vol. 9, pages 1 - 37, 1994, and in the Polymer Handbook, 3rd Ed., J. Bandrup, E.H. Immergut (Eds.), 1989. The Polymer Handbook gives many examples for amorphous polymers having a glass transition temperature of lower than about -20°C: butyl rubber (non-vulcanised) of about -71 °C, poly(1-hexene) (prepared by Ziegler-Natta catalysis; *cf.* ref. 1072: J. Bourdariat, R. Isnard, J. Odin, J. Polym. Sci., Polym. Phys. Ed. 11, 1817 - 1828, 1973) of about -58 °C (page VI/213), isotactic poly(1-butene) (*cf.* for example R.W. Warfield, R. Brown, J. Polym. Sci. A-2 5, 791, 1967) of about -24 °C (page VI/213), and poly(isobutene) of about -73 °C (page VI/214). It should be noted that some of these polymers can sometimes be (partly) crystalline which is often dependent from catalyst compositions and process conditions employed in the polymerisation process. For example, EP 0300638 A2, discloses a process for the preparation of highly crystalline poly(1-butene). However, it can be envisaged that, *e.g.,* a certain polyisobutene, a certain polybutene or a certain butyl rubber, may have a glass transition temperature that differs from the value listed in the Polymer Handbook. Atactic polypropene has a glass transition temperature of about -20 °C (*cf.* U. Gaur, B. Wunderlich, J. Phys. Chem. Ref. Data 10, 1052 - 1063, 1981).

Amorphous polymers having a surface tension of less than about 50 mN/m at 20 °C are also well known in the art. The Polymer Handbook, 3rd Ed., J. Bandrup, E.H. Immergut (Eds.), 1989, gives various examples for such amorphous polymers: polyisobutene ($M_n$ = 2300): 33.6 mN/m at 20 °C; atactic polypropene: 29.4 mN/m at 20 °C; branched polyethene ($M_n$ = 7000): 35.3 mN/m at 20 °C; ethene propene copolymers ($M_w$ ranging from about 15,000 to about 63,000; propene content ranging from about 34 mol % to about 60 mol%): 30.7 - 33.8 mN/m at 20 °C; poly(4-methyl-1-pentene): 25 mN/m at 20 °C. It should be noted that surface tension is essentially independent from molecular weight when the molecular weight is greater than about 2000 and that the surface tension then reaches within about 1 mN/m of the value at indefinite molecular weight.

According to a preferred embodiment, the amorphous polymer is preferably selected from the group consisting of: (a) a polymer comprising about 50.0 % to about 98 % by weight of isobutene and about 2 % to about 50.0 % of a $C_2$ - $C_{12}$ alkene other than isobutene, a $C_4$ - $C_{12}$ alkadiene, or a mixture thereof, based on the total weight of the polymer; (b) a polymer comprising more than about 98 % to about 100 % by weight of isobutene, based on the total weight of the polymer; (c) a polymer comprising about 50.0 % to about 99.9 % by weight of propene and about 0.1 % to about 50.0 % of a $C_2$ - $C_{12}$ alkene other than propene, a $C_4$ - $C_{12}$ alkadiene, or a mixture thereof, or about 100 wt.% propene, based on the total weight of the polymer; (d) a polymer comprising about 0.1 % to about 50.0 % by weight of ethene and about 50.0 % to about 99.9 % of a $C_2$ - $C_{12}$ alkene other than ethene, a $C_4$ - $C_{12}$ alkadiene, or a mixture thereof, based on the total weight of the polymer; (e) a polymer comprising about 0.1 % to about 50.0 % by weight of 2-methyl-1-pentene and about 50.0 % to about 99.9 % of a $C_2$ - $C_{12}$ alkene other than 2-methyl-1-pentene, a $C_4$ - $C_{12}$ alkadiene, or a mixture thereof, or about 100 wt.% 2-methyl-1-pentene, based on the total weight of the polymer; and mixtures of (a), (b), (c), (d) and/or (e).

Examples for group (a) include "polyisobutenes", "polybutenes" and "butyl rubbers". Examples for group (b) include "polyisobutene homopolymers". Examples for group (c) include ethene-propene elastomers, EPDM elastomers and atactic polypropenes. Examples for group (d) include ethene butene copolymers. Examples for group (e) include homopolymers of 2-methyl-1-pentene.

According to a more preferred embodiment of the present invention, the amorphous polymer is selected from the group consisting of polyisobutenes, polybutenes, butyl rubbers, atactic polypropene, copolymers of propene and a $C_2$ - $C_{12}$ alkene other than propene (and optionally a diene), copolymers of ethene and a $C_2$ - $C_{12}$ alkene other than ethene (and optionally a diene), and mixtures thereof. According to an even more preferred embodiment of the present invention, the amorphous polymer is selected from the group consisting of ethene-propene copolymers, ethene-butene copolymers, ethene-propene-butene terpolymers, ethene-propene-diene copolymers, polyisobutenes, polybutenes, butyl rubbers, atactic polypropenes and mixtures thereof. Even more preferably, the amorphous polymer is selected from the group consisting of polyisobutenes, polybutenes, butyl rubbers, atactic polypropenes and mixtures thereof. Yet even more preferably, the amorphous polymer is selected from the group consisting of (a), (b) and a mixture thereof, wherein (a) and (b) are polymers as defined above. Yet even more preferably, the amorphous polymer is selected from the group consisting of polyisobutenes, polybutenes, butyl rubbers and mixtures thereof. Yet, even more preferably, the amorphous polymer is a polyisobutene, and preferably, the polyisobutene is a polyisobutene homopolymer. All these polymers have a glass transition temperature of less than about -20 °C as is disclosed above.

The viscosity of the amorphous polymer and of all products described herein is determined according to ISO 3219. The measurement is carried out at 70.0 °C.

Preferably, the polybutene has a number average molecular weight $M_n$ of about 500 to about 20,000, more preferably of about 1,300 to about 20,000, a molecular weight distribution of about 1.5 to about 3, a density of about 0.90 to about 0.98 g/cm³ and a kinematic viscosity of about 200 cSt ($mm^2.s^{-1}$) to about 100,000 cSt ($mm^2.s^{-1}$) at 100 °C according to ASTM D 445 (data in Saybolt Universal Seconds which are used in *e.g.* the Ineos datasheet September 2008 can be converted into $mm^2.s^{-1}$ according to ASTM D 2161). Suitable polybutenes include, *e.g.*, several Indopol grades available from Ineos (Great Britain), several polybutene grades available from Kermat (Belgium), several Nisseki polybutene grades available from JX Nippon Oil & Energy (Japan), and several KVIS grades available from Kothari Petrochemicals (India). For example, Indopol H-300 has a glass transition temperature of about -66.9 °C (DSC), an $M_n$ of about 1300 (GPC), a molecular weight distribution of about 1.65 (GPC), a density of about 0.904 g/cm³ and a kinematic viscosity of about 605 to about 655 cSt at 100 °C (Ineos datasheet September 2008). Indopol H-18000 has an $M_n$ of about 6000 (GPC), a molecular weight distribution of about 1.70 (GPC), a density of about 0.921 g/cm³ and a kinematic viscosity of about 36000 to about 45000 cSt at 100 °C (Ineos datasheet September 2008). KVIS 30 has a molecular weight of about 1250 to about 1350, a kinematic viscosity of about 600 to 697 cSt at 100 °C and a density of about 0.8910 to about 0.910 g/cm³.

The butyl rubber has preferably a Mooney viscosity ML 1 + 8 (ASTM D 1646; 125 °C) of about 25 to about 75 and a level of unsaturation of about 1.0 to about 3.0 mol%. Suitable materials include Exxon™ Butyl Rubber which has a density of 0.92 g/cm³ and Lanxess Butyl 101-3 which has a density of 0.92 g/cm³, a Mooney viscosity ML 1 + 8 (ASTM D 1646; 125 °C) of 51 ± 5 and an unsaturation of 1.75 ± 0.20 mol %.

The poly(2-methyl-1-pentene) has preferably a melt index of about 1 to about 250 g/min (ASTM D 1236, 260 °C, 5 kg), a softening point of about 160 to about 200 °C (Vicat, ASTM D 1525) and a density of about 0.82 to about 0.95 g/cm³ at 25 °C. Amorphous poly(2-methyl-1-pentene) having a low glass transition temperature is for example disclosed by Haiyang Gao, Xiaofang Liu, Ying Tang, Jin Pan and Qing Wu, Polym. Chem. 2(6), 1398 - 1403, 2011.

The ethene-propene copolymers, ethene-butene copolymers and ethene-propene-butene terpolymers preferably have a Brookfield viscosity of about 300 to about 200,000 mPa.s at 190 °C according to ASTM D 3236. Suitable products include certain Eastoflex grades, which are available from Eastman Chemical Company, Rextac® grades of Rextac LLC and Vestoplast® grades of Evonik. The ethene-propene copolymer Eastoflex 1045 has for example a Brookfield viscosity of about 4500 mPa.s (ASTM D 3236) and a glass transition temperature of -22 °C whereas Eastoflex E1003 has a Brookfield viscosity of about 300 mPa.s (ASTM D 3236) a glass transition temperature of -33 °C (*cf.* Eastman brochure "Eastoflex™ - amorphous polyolefins", 2009). Other examples include Vestoplast® 703, which has a glass transition temperature of about -28 °C and a Brookfield viscosity of about 2700 mPa.s at 190 °C and Vestoplast® 792, which has a glass transition temperature of about -27 °C and a Brookfield viscosity of about 120000 mPa.s at 190 °C (Evonik brochure "Vestoplast® - Amorphous Poly-alfa-olefins"). In such amorphous propene copolymers and terpolymers, the amount of propene is preferably at least about 50 wt.%, and is preferably about 70 to about 98 wt.%, based on the total weight of the atactic propene copolymer.

The atactic polypropene has a Brookfield viscosity of about 200 to about 10000 mPa.s at 190 °C according to ASTM D 3236. Suitable products include Polytac™ grades of Crowley Chemical Company and Rextac® grades of Rextac LLC. Polytac™ grades have a Brookfield viscosity in the range of about 500 to about 2500 mPa.s at 190 °C and Rextac® 2104, 2115 and 2180 have a Brookfield viscosity of 400, 1500, and 8000 mPa.s, respectively, at 190 °C.

The polyisobutene has a number average molecular weight ($M_n$), a viscosity average molecular weight ($M_v$), or a weight average molecular weight ($M_w$) as described for the amorphous polymer above. Similarly, the molecular weight distribution $M_w/M_n$ of the polyisobutenes is as described above.

The number average molecular weight $M_n$ for polyisobutenes of lower molecular weights, *e.g.*, up to about 2,500, is determined by GPC. For the higher number average molecular weights, they are determined by viscosity measurements (Staudinger Index $J_o$), wherein the Staudinger Index is calculated from the flow time at 20 °C through capillary I of an Ubbelohde viscometer (for measuring the flow time, a diluted polymer solution is used) using the following formulas:

$$J_o = \eta_{sp} \,/\, c \,(1 + 0.31 \times \eta_{sp}) \; [cm^3/g]$$

$$\eta_{sp} = (t/t_o) - 1$$

wherein t is the flow time of the solution, with Hagenbach-Couette correction, $t_o$ is the flow time of the solvent (*e.g.* isooctane), with Hagenbach-Couette correction, and c is the concentration if the solution in g/cm³. The number average molecular weight $M_n$ and the viscosity average molecular weight $M_v$ are then calculated as follows:

$$M_n = \sqrt[0.94]{\dfrac{J_o \times 1000}{2.27}}$$

$$M_v = \sqrt[0.65]{\dfrac{J_o \times 100}{3.06}}$$

Reference is made to the BASF website referring to "Glissopal® 1000, 1300 and 2300", accessed June 17, 2021 (www.basf.com), and to the BASF brochure "Oppanol® B types" (10 N to 15 N (10 SFN to 15 SFN)) of July 2019 and to the BASF brochure "Oppanol® N types" (50 to 150) of July 2019.

Polyisobutenes used in the composition of the invention preferably have a Staudinger Index $J_o$ of about 1 to about 1500 cm³/g, preferably of about 2 to about 1000 cm³/g, as determined at 20 °C. In one embodiment, the polyisobutenes have a Staudinger index $J_o$ of about 1 to about 500 $cm^3/g$, preferably of about 2 to about 300 $cm^3/g$ and more preferably of about 3 to about 150 $cm^3/g$.

The polyisobutenes preferably have a surface tension of less than about 40 mN/m at 20 °C. The density of the polyisobutenes is preferably between about 0.86 to about 0.98 $g/cm^3$.

The polyisobutenes may be prepared in various ways. Polymerisation may be conducted in single stage processes or in multi stage processes. It is preferred that the polymerisation is conducted in the liquid phase using a Lewis acid as catalyst, preferably boron trifluoride complex catalyst, optionally in the presence of a cocatalyst. Such processes are well known in the art.

Preferred polyisobutenes are from the Glissopal® and Oppanol® grades, in particular, Oppanol® grades B and N type, which are commercially available from BASF. Other preferred polyisobutenes are available from Nippon Oil, in particular the Tetrax grades. These polyisobutenes are herein classified as "polyisobutene homopolymers", *i.e.*, polymers comprising more than about 98 wt.% of isobutene, based on the total weight of the polymer.

## 4.2 THE AMORPHOUS POLYMER COMPOSITION

The amorphous polymer composition may comprise an amorphous polymer or a mixture of two or more amorphous polymers. The amorphous polymer(s) has/have the properties as disclosed above.

The amorphous polymer of the amorphous polymer composition has a number average molecular weight ($M_n$), a viscosity average molecular weight ($M_v$), or a weight average molecular weight ($M_w$) as described for the amorphous polymer above. Similarly, the molecular weight distribution $M_w/M_n$ of the amorphous polymer is as described above.

It is preferred that the amorphous polymer composition comprises about 50 to about 100 wt.% of a polyisobutene, more preferably a polyisobutene homopolymer, and about 0 to about 50 wt.% of one or more other amorphous polymer(s), based on the total weight of the amorphous polymer composition, wherein it is preferred that the one or more other amorphous polymer(s) is/are selected from the group consisting of the amorphous polymers (a) - (f) as disclosed above.

More preferably, the other amorphous polymer is selected from the group consisting of polybutenes, polyisobutenes, butyl rubbers, ethene-propene copolymers, ethene-butene copolymers, ethane-propene-butene terpolymers, amorphous propene copolymers, atactic polypropenes, poly(2-methyl-1-pentene) and mixtures thereof. These polymers have a glass transition temperature of less then about -20 °C as is disclosed above.

More preferably, the amorphous polymer composition comprises about 70 to about 100 wt.% of a polyisobutene, preferably a polyisobutene homopolymer, and about 0 to about 30 wt.% of the one or more other amorphous polymer(s). Even more preferably, the amorphous polymer composition comprises about 90 to about 100 wt.% of a polyisobutene, preferably a polyisobutene homopolymer, and about 0 to about 10 wt.% of the one or more other amorphous polymer(s). Most preferably, the amorphous polymer composition comprises about 100 wt.% of a polyisobutene, preferably a polyisobutene homopolymer, all based on the total weight of the amorphous polymer composition.

In one embodiment, the amorphous polymer compositions comprises about 75 to about 95 wt.% of a polyisobutene, preferably a polyisobutene homopolymer, and about 5 to about 25 wt.% of the one or more other amorphous polymer(s), based on the total weight of the amorphous polymer composition. The invention also relates to amorphous polymer compositions comprising about 80 to about 90 wt.% of a polyisobutene and/or a polyisobutene homopolymer and about 10 to about 20 wt.% of the one or more other amorphous polymer(s), based on the total weight of the amorphous polymer composition. In one embodiment, the amorphous polymer compositions comprises about 20 wt.%, about 30 wt.%, about 40 wt.%, about 50 wt.%, about 60 wt.%, about 70 wt.%, about 80 wt.%, or about 90 wt.% of the one or more other amorphous polymer(s), based on the total weight of the amorphous polymer composition.

## 4.3 THE CORROSION PROTECTING COMPOSITION

The corrosion protecting composition comprises (i) an amorphous polymer composition comprising an amorphous polymer having a glass transition temperature of -20 °C or less, (ii) a water-absorbing filler, and (iii) an antioxidant. Said amorphous polymer composition (i) and said amorphous polymer are described in detail above. The water-absorbing filler (ii) is described in detail below (*see,* Section 4.4).

The composition of the invention comprises about 30 wt.% to 70 wt.% of the amorphous polymer composition based on the total weight of the composition. In one embodiment, the composition comprises about 30 to about 60 wt.%, about 40 to about 50 wt.%, about 40 to about 60 wt.%, or about 40 to about 70 wt.% of the amorphous polymer composition based on the total weight of the composition. In one embodiment, the composition of the invention comprises about 42 wt.% of the amorphous polymer composition.

The amorphous polymer of the corrosion protecting composition has a number average molecular weight ($M_n$), a viscosity average molecular weight ($M_v$), or a weight average molecular weight ($M_w$) as described for the amorphous polymer above. Similarly, the molecular weight distribution $M_w/M_n$ of the amorphous polymer is as described above.

In one embodiment, the amorphous polymer composition comprising an amorphous polymer has a glass transition temperature of -20 °C or less as determined by DSC and a number average molecular weight ($M_n$), a viscosity average molecular weight ($M_v$), or a weight average molecular weight ($M_w$) as described for the amorphous polymer above.

The corrosion protecting composition comprises at least about 30 wt.% or higher of the non-polymeric water-absorbing filler (ii), based on the total weight of the composition. In one embodiment, the composition comprises about 35 wt.% or higher, about 40 wt.% or higher, about 50 wt.% or higher or about 60 wt.% of the non-polymeric water-absorbing filler (ii), based on the total weight of the composition. In one embodiment, the composition comprises about 60 wt.% or lower, about 55 wt.% or lower, about 50 wt.% or lower, or about 40 wt.% or lower of the non-polymeric water-absorbing filler (ii), based on the total weight of the composition. In one embodiment, the composition comprises about 30 to 70 wt.%, about 30 to 60 wt.%, about 40 to 60 wt.%, or about 40 to 70 wt.% of the non-polymeric water-absorbing filler (ii), based on the total weight of the composition.

In one embodiment, the corrosion protecting composition comprises between about 30 and 70 wt.% of the amorphous polymer composition (i) and between about 30 and 70 wt.% of the non-polymeric water-absorbing filler (ii), based on the total weight of the composition. In one embodiment, the corrosion protecting composition comprises between about 40 wt.% and 60 wt.% of the amorphous polymer composition (i) and between about 40 wt.% and 60 wt.% of the non-polymeric water-absorbing filler (ii), based on the total weight of the composition.

In one embodiment, the corrosion protecting composition comprises between about 30 and 70 wt.% of the amorphous polymer composition (i) and between about 0.1 and 10 wt.% of the polymeric water-absorbing filler (ii), based on the total weight of the composition. In one embodiment, the corrosion protecting composition comprises between about 40 and 60 wt.% of the amorphous polymer composition (i) and between about 0.2 wt.% and 9 wt.% of the polymeric water-absorbing filler (ii), based on the total weight of the composition.

In one embodiment, the corrosion protecting composition comprises between about 30 and 50 wt.% of the amorphous polymer composition, between about 0.3 and 10 wt.% of the polymeric water-absorbing filler, and between about 30 and 60 wt.% of the non-polymeric water-absorbing filler. In one embodiment, the corrosion protecting composition comprises between about 40 and 50 wt.% of the amorphous polymer composition, between about 0.5 wt.% and 9 wt.% of the polymeric water-absorbing filler, and between about 50 and 60 wt.% of the non-polymeric water-absorbing filler. In one embodiment, the corrosion protecting composition comprises about 42 wt.% of the amorphous polymer composition. All weight percentages are based on the total weight of the composition.

The invention relates to a composition for protection against corrosion, comprising: (i) an amorphous polymer composition comprising an amorphous polymer having a glass transition temperature of -20 °C or less as determined by DSC and wherein the amorphous polymer has an average molecular weight in the range of 1,000 to 3,050,000 g mol$^{-1}$ as determined by gel permeation chromatography, (ii) one or more water-absorbing filler having a water-absorption of 20 wt.% or higher as determined according to the procedure described in standard EN-ISO 10769:2011, wherein the one or more water-absorbing fillers comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises (a) at least 30 wt.% of the non-polymeric water-absorbing filler, and /or (b) at least 0.1 wt.% of a polymeric water-absorbing filler, all based on the total weight of the composition.

In a preferred embodiment, said amorphous polymer is selected from the group of polymers consisting of (a) - (f) as defined above. In a further preferred embodiment, the amorphous polymer is selected from the group consisting of (a), (b) and a mixture thereof.

The corrosion protecting composition may further comprise one or more other additives, *e.g.*, additional filler materials and/or antioxidants, surface tension modifiers, pH regulating agents, colorants, pigments and the like.

The corrosion protecting composition of the invention also comprises an antioxidant (iii). The antioxidant (iii) is described in more detail below.

In one embodiment, the corrosion protecting composition of the invention comprises a pigment. The pigment may be selected from any pigment generally used in this technical field. The corrosion protecting composition may comprise a pigment in the amount of 0.1 wt.%, 0.2 wt.%, 0.3 wt.%, 0.4 wt.%, or 0.5 wt.% or more, all based on the total weight of the composition.

In one embodiment the corrosion protecting composition comprises about 30 to about 60 wt.% of the amorphous polymer composition (i), and about 30 to about 60 wt.% of a water-absorbing filler as provided herein (ii) , based on the total weight of the composition. If said total is not equal to 100 wt.%, it will be clear to a skilled person that the composition comprises additional components, e.g., additional filler materials, additives, *etc.*.

In one embodiment, the corrosion protecting composition of the invention comprises about 40 to about 60 wt.% of the amorphous polymer composition (i), and about 40 to about 60 wt.% of a water-absorbing filler as provided herein (ii), based on the total weight of the composition. In one embodiment, the corrosion protecting composition of the invention comprises about 40 to about 50 wt.% of the amorphous polymer composition (i), and about 35 to about 55 wt.% of a water-absorbing filler (ii), based on the total weight of the composition.

In one embodiment, the corrosion protecting composition comprises (i) about 30 to about 50 wt.% of the amorphous polymer composition comprising an amorphous polymer having a glass transition temperature of -20 °C or less, (ii) about 30 to about 40 wt.% of a water-absorbing filler as provided herein, and (iii) about 0.05 to about 5 wt.% of an antioxidant, all based on the total weight of the composition. Preferably, the total of components (i), (ii), and (iii) is equal to 100 wt.%. If said total is not equal to 100 wt.%, it will be clear to a skilled person that the composition comprises additional components, *e.g.*, additional filler materials, additives, etc..

Thus, the composition optionally further comprises one or more additives (iv), and/or one or more additional fillers (v). If one or more additives (iv) are present, it is preferred that each of the one or more additives is present in an amount of about 0.01 to about 10 wt.%, preferably in an amount of about 0.05 to about 5 wt.%, based on the total weight of the composition. If one or more additional fillers (v) are present, it is preferred that the total amount of the one or more additional fillers is about 50 to about 60 wt.%, based on the total weight of the composition. Preferably, the total of components (i), (ii), (iii) and (iv) and/or (v) equals 100 wt.%. However, if said total does not equal 100 wt.%, it will be clear to a person skilled in the art that the composition comprises additional components.

If one or more additives (iv) are present, it is preferred that the one or more additives are selected from the group consisting of colorants and pH regulating agents. The additional filler (v) is described in more detail below.

In yet another preferred embodiment, the corrosion protecting composition comprises about 30 to about 70 wt.% of the amorphous polymer composition (i), about 30 to about 60 wt.% of a water-absorbing filler as provided herein (ii), an antioxidant (iii) and about 0 to about 30 wt.% of an additional filler (v), all based on the total weight of the corrosion protecting composition. More preferably, the composition comprises about 40 to about 70 wt.% of the amorphous polymer composition (i), about 30 to 60 wt.% of a water-absorbing filler as provided herein (ii), an antioxidant (iii) and about 3 to about 20 wt.% of an additional filler (v), all based on the total weight of the corrosion protecting composition. Even more preferably the composition comprises about 40 to about 60 wt.% of the amorphous polymer composition (i), about 30 to 55 wt.% of a water-absorbing filler (ii), an antioxidant (iii) and about 5 to about 10 wt.% of an additional filler (v), all based on the total weight of the corrosion protecting composition. Most preferably the composition comprises about 40 to about 45 wt.% of the amorphous polymer composition (i), about 50 to 55 wt.% of a water-absorbing filler (ii), an antioxidant (iii) and about 5 to about 7 wt.% of an additional filler (v), all based on the total weight of the corrosion protecting composition.

In one embodiment of the invention, the corrosion protecting composition does not comprise any plasticizer. In one embodiment, the corrosion protecting composition does not comprise a petrolatum. In one embodiment, the corrosion protecting composition does not comprise a wax. In one embodiment, the corrosion protecting composition does not comprise a surface tension modifier. In one embodiment, the corrosion protecting composition does not comprise any combination of the above agents.

One property of the corrosion protecting composition of the invention is its capacity to absorb water. The corrosion protecting composition is capable of absorbing in a short time (*i.e.*, within a several seconds/minutes to several hours) sufficient water from the surface of the article to be protected in order to enable the corrosion protecting composition of the invention to adhere quickly to the surface of said article.

The water-absorption of the corrosion protecting composition of the invention is determined by an immersion method based on ASTM Standard D 570, "Standard Test Method for Water Absorption of Plastics". The method has further been adapted, that is, the water-absorption (in wt.%) of the standard and the water-absorption of the corrosion protecting composition, expressed in grams of water absorbed per square meter (g/m$^2$), are determined using distilled water at a temperature of 23 ± 1 °C, and with 72 hours of immersion. As described in the examples, the determination of the water-absorption (g/m$^2$), $w_A$ (g/m$^2$), of the corrosion protecting composition of the invention comprises the steps of:

(1) weighing a cup having a known depth in the range of 15 to 25 mm and a surface with a known diameter (round surface) or a known length and width (rectangular or square surface) in the range of 30 to 50 mm, to obtain mass A ((in grams; (g));

(2) completely filling the plastic cup with said composition, avoiding air entrapments, and smoothing the surface;

(3) weighing the filled cup to obtain mass B ((in grams; (g));

(4) placing the filled cup in a container of distilled water maintained at a temperature of 23 ± 1 °C, completely submerging the cup;

(5) placing the cup in a climate cabinet and maintaining the water temperature at 23 ± 1 °C for 72 hours;

(6) taking the cup out of the container after 72 hours, drying its surfaces and weighing the dried cup to obtain mass C ((in grams; (g)); and

(7) calculating the water-absorption (g/m$^2$), expressed in g/m$^2$, as follows:

$$w_A \left( \frac{g}{m^2} \right) = \frac{[(C - A) - (B - A)]}{\text{surface of cup}} * 100\%.$$

11

Once the thickness of a layer of the corrosion protecting composition surpasses a certain minimum thickness, the water-absorption of said layer no longer depends on the mass of the corrosion protecting composition, but rather on the surface area of said layer. Hence, the water-absorption is preferably expressed in terms of the amount of water that is absorbed in relation to the surface area of a layer of the corrosion protecting composition in a certain amount of time, *i.e.*, water-absorption (g/m2).

When determining the water-absorption care should be taken to ensure that the layer of the corrosion protecting composition has a thickness that is larger than said minimum thickness, thus eliminating the influence of layer thickness on the water-absorption ($g/m^2$). When the water-absorption ($g/m^2$) of the corrosion protecting composition is too low, the composition is not capable of absorbing sufficient water from the surface of the article to be protected in a short time to enable the corrosion protecting composition to adhere sufficiently quick to the surface of said article. Similarly, when the water-absorption of the corrosion protecting composition is too high, the composition becomes weaker, starts losing its consistency, and may detach too easily from a surface.

In one embodiment, the corrosion protecting composition of the invention has a water-absorption in the range of about 100 to about 2,500 $g/m^2$, about 100 to about 2,000 $g/m^2$, about 100 to about 1,600 $g/m^2$, about 100 to about 1,400 $g/m^2$, about 100 to about 1,200 $g/m^2$, or about 100 to about 1,000 $g/m^2$. In one embodiment, the water-absorption of the corrosion protecting composition is at least about 100 $g/m^2$, at least about 150 $g/m^2$, at least about 200 $g/m^2$, at least about 250 $g/m^2$, or at least about 300 $g/m^2$. In one embodiment, the water-absorption of the corrosion protecting composition is below about 1,500 $g/m^2$, below about 2,000 $g/m^2$, below about 2,200 $g/m^2$, or below about 2,500 $g/m^2$.

An important property of the corrosion protecting composition of the invention is its increased viscosity. The viscosity of the composition of the invention is determined as described for the amorphous polymer above. In one embodiment, the viscosity is below about 15,000. In one embodiment, the viscosity is below about 10,000. In one embodiment, the viscosity is above about 4,300, above about 4,500, above about 5,000, above about 6,000, above about 7,000, above about 8,000, or above about 9,000. In one embodiment, the composition has a viscosity at a shear rate of 2.4 $s^1$ (Pa.s) at 70 °C in the range of between about 4,500 and about 15,000, more preferably between about 6,000 and about 15,000, and even more preferable between about 7,000 and about 15,000. In one embodiment, the viscosity of the composition is between about 9,000 and about 11,000. In one embodiment, the viscosity of the composition is about 11,000 to 15,000.

Another advantage of the composition of the invention is that the composition has an improved setting on the article to be protected, including an improved deformability. Also, the composition of the invention has very good adhesion, *i.e.*, a very good adhesive power to the surface of the article, irrespective of whether the surface is dry, moist, wet, immersed or submerged. Also, the composition of the invention has a very high adhesive tack. In comparison with, *e.g.*, the STOPAQ® Subsea Compound, not only the adhesive power of the composition of the invention to the surface to be protected is improved, but also, the optimum adhesion of the composition to said surface is achieved in less time due to the improved adhesive tack of said composition, in particular, at lower temperatures.

The composition of the invention does not set and thus remains soft, is essentially impermeable for water, moisture, salts and the like and is pore-tight. In one embodiment, the composition is a paste or has a paste-like consistency. An additional and very important feature of the corrosion protecting composition of the invention is that if a protective layer of the composition is mechanically deformed to a relatively small extent, *e.g.*, by wave action, the damage is repaired automatically within a relatively short period of time due to the fluid-like and/or visco-elastic nature of the composition of the invention. That is, the composition has self-recovering properties and any deformation or damage is repaired as a result of flow of the composition into holes or cavities caused by mechanical deformations or other stresses. Thus, a protective layer comprising the composition of the invention is not only smooth when applied, but even if indentations, imprints, dents, cavities and the like are caused by mechanical forces, they will disappear in due course and the smooth surface of the protective layer reappears. Because of this fluid-like nature any protective layer comprising the composition of the invention does not tear or break and does not build up internal stresses. Irregularities on the surface of the article are perfectly filled or enveloped by the corrosion protecting composition of the invention, whereas materials according to the state of the art often give rise to problems in such circumstances. The fluid-like and/or visco-elastic nature of the composition of the invention also implies that it has no pot-life whereas protective coatings and curable resins known in the art need to be applied within a certain period of time.

When the composition of the invention is compared to the STOPAQ® Subsea Compound known from the prior art, an improved protection against corrosion is obtained due to the fact that the composition of the invention not only prevents water from reaching the surface to be protected, but also minimizes the voids present in between said surface and the layer of the corrosion protecting composition. Thus, the problem solved by the present invention is the provision of means for the protection against corrosion. The present invention solves the problem by providing, for example, a composition for the protection against corrosion of articles of the invention.

Other advantages of the corrosion protecting composition of the invention are a high chemical stability and resistance over a wide pH-range and essentially no cathodic disbondment or undercreep corrosion (*e.g.*, caused by under-film migration of water).

The composition of the invention has a very good thermal stability. According to the invention, the composition can be used within an operating temperature range of about -20 °C to about 70 °C, about -20 °C to about 90 °C, about -30 °C to about 80 °C, about -40 °C to about 90 °C, or about -50 °C to about 100 °C. In one embodiment, the composition is used within an operating temperature of about -20 °C to about 70 °C. Generally, the minimum operating temperature depends on the glass transition temperature, whereas the maximum operating temperature depends on performance requirements, such as, for example, the adhesion at $T_{max}$.

When an article is partly submerged, *e.g.*, the riser of an oil platform, the temperature above the water surface generally differs from the temperature below the water surface. Due to the wide operating temperature range of the corrosion protecting composition of the invention, it is now possible to use the same corrosion protecting composition both on parts of the article that are situated below the water surface and on parts above the water surface.

There are additional important advantages of the corrosion protecting composition of the invention. Most protecting systems require the use of a primer before these systems are applied to the article to provide sufficient adhesion, in particular in a moist or wet environment (such as immersed or submerged). The use of a primer is not required with the composition of the invention, which implies that the composition of the invention can be applied within a shorter period of time thereby making the operation less expensive.

Problems that do arise when, *e.g.*, prior art coating systems are applied are that air bubbles may be formed in the coating, which easily burst open thereby leading to pinholes in the coating layer and a poor protection. The present inventors have found that when the composition of the invention is used, any air bubble present between the surface of the article and the protective layer of the composition of the invention migrates within the protective layer of the composition, away from the surface of the article. In locations where the article is in contact with salt, *e.g.* seawater, salt crystals are formed on the surface of the metal article and before, *e.g.*, a coating system is applied to said surface, it requires thorough cleaning. In contrast, the composition of the invention encapsulates the salt crystals and removal of these crystals is not required. The necessity that for prior art protecting systems the salt crystals must be removed is that these crystals are hygroscopic and absorb water that permeates the protective layer. As a consequence, the salt crystals swell thereby causing cracks in the protective layer, which eventually leads to a deteriorated protection and corrosion. In practice, these salt crystals cause serious problems in the operation of the article, requiring that the state of the art protective systems must be replaced regularly. The composition of the invention, however, does not suffer from such problems and is thus much more economical to the end-user.

Articles protected by the composition of the invention can be easily inspected since a protective layer of the composition of the invention can be easily removed and, after inspection, reapplied. Most materials according to the state of the art are more difficult to remove. Moreover, when removed the surface of the metal article needs to be thoroughly cleaned before such prior art materials are reapplied, if possible at all, since it will be apparent to those skilled in the art that cured systems, which are applied in the uncured state, cannot be reapplied. As a consequence, a protective layer of the composition of the invention is also more easily tested.

### 4.4 FILLER

The composition of the invention comprises one or more filler(s). The inventive composition comprises one or more water-absorbing filler(s). In one embodiment, the inventive composition comprises one or more water-absorbing fillers and one or more inert filler(s). The water-absorbing filler may comprise two or more water-absorbing fillers and may be of organic and/or inorganic nature. The organic and/or inorganic water-absorbing fillers are one or more non-polymeric water-absorbing filler(s) and/or optionally one or more polymeric water-absorbing filler(s). The composition of the invention comprises any combination of one or more water-absorbing filler(s), *i.e.,* any combination of non-polymeric water-absorbing filler(s) and any combination of non-polymeric water-absorbing filler(s) and polymeric water-absorbing filler(s).

The water-absorption of a filler is determined according to the procedure described in standard EN-ISO 10769:2011. The same procedure is herein applied for the determination of the water-absorption of different fillers. As according to EN-ISO 10769:2011, water-absorption of a water-absorbing filler is measured at ambient temperature, and the duration of the test is 24 h.

The amount of water-absorbing filler that is present in the composition depends, amongst others, on the water-absorption $w_A$ of said filler. When a water-absorbing filler with a lower water-absorption is applied in the corrosion protecting composition, the amount of said filler in the composition is generally higher than when a filler with a high water-absorption is applied, in order to ensure a sufficient water-absorption of the corrosion protecting composition. The water-absorption of a filler depends amongst others on the specific surface, the particle size and the surface activity of the filler.

A wide variety of inorganic and organic water-absorbing fillers is known in the art, and examples include silica, calcium oxide, clay minerals, *e.g.*, vermiculites and smectites, and water-absorbing polymers, *e.g.*, polyacrylamides such as polymethylacrylate, respectively. Water-absorbing polymers known in the art are described in more detail in, *i.e.,* "Modern Superabsorbent Polymer Technology", F.L. Buchholtz and A.T. Graham, Wiley VCH, 1998, pp. 71 - 103.

In one embodiment, the non-polymeric water-absorbing filler comprises a mineral clay. A clay mineral is a hydrous phyllosilicate, *i.e.,* a hydrous silicate of aluminium (Al), magnesium (Mg), potassium (K) or iron (Fe), and other less abundant elements. Clay minerals are known in the art, and are described in more detail in Kirk-Othmer, "Encyclopedia of Chemical Technology", 4th Ed., John Wiley & Sons, New York 1993, Volume 6, pp. 383 - 423. Examples of clay minerals include vermiculites, kaolinites and smectites such as montmorillonites and bentonites. In one embodiment, the water-absorbing filler comprises a hydrated aluminum silicate crystalline mineral, preferably a kaolinite or kaolin (china clay). The clay mineral may further comprise a sodium bentonite clay, a sodium montmorillonite clay, a potassium bentonite clay, a potassium montmorillonite clay a calcium bentonite clay, a calcium montmorillonite clay, an aluminium bentonite clay, an aluminium montmorillonite clay, a combination of two or more bentonite clays, a combination of two or more montmorillonite clays, or a combination of one or more bentonite clay and one or more montmorillonite clay. Furthermore, the bentonite clay and/or the montmorillonite clay may comprise a surface modified bentonite clay. Preferably, the mineral clay comprises a bentonite clay, more preferably a sodium bentonite clay. For example, sodium bentonite has a water absorption in the range of about 330 wt.% to about 400 wt.% and kaolin has a water absorption in the range of about 188 wt.% to about 212 wt.% as determined by EN-ISO 10769:2011.

According to the invention, the water-absorbing filler comprises a filler that binds water by a chemical reaction, *i.e.,* a cement. In one embodiment, the cement is sulfo aluminate cement. For example, sulfo aluminate cement has a water absorption in the range of about 280 to about 298 wt.% as determined by EN-ISO 10769:2011. In one embodiment, the water-absorbing filler comprises a hydraulic cement. A hydraulic cement is a cement that hardens due to reaction with water. Examples of a hydraulic cement are Portland cement and Portland cement blends (*e.g.,* Portland blast-furnace cement or Portland-fly ash cement), supersulfated cements, calcium aluminate cements and calcium sulfoaluminate cements.

In one embodiment, the water-absorbing filler comprises silicon dioxide. In one embodiment, the water-absorbing filler comprises both a filler that binds water by chemical reaction and silicon dioxide.

In one embodiment, the water-absorbing filler has a water-absorption of about 20 wt.% or higher, more preferably of about 25 wt.% or higher and even more preferably of about 30 wt.% or higher. In one embodiment, the water-absorption of the water-absorbing filler is about 40 wt.% or higher, about 50 wt.% or higher or about 70 wt.% or higher. In one embodiment, the water-absorption of the water-absorbing filler is about 100 wt.% or higher. In one embodiment, the water-absorption of the water-absorbing filler is about 150 wt.% or higher or about 200 wt.% or higher. In one embodiment, the water-absorbing filler has a water-absorption of between about 20 wt.% and 400 wt.%, about 50 wt.% and 300 wt.%, about 100 wt.% and 300 wt.%, or about 100 wt.% and 400 wt.%.

The corrosion protecting composition comprises a non-polymeric water-absorbing filler in an amount of at least 30 wt.%, at least 40 wt.%, or at least 50 wt.% based on the total weight of the composition. In one embodiment, the composition comprises a non-polymeric water-absorbing filler in an amount of about 30 to 60 wt.%, more preferably of about 30 to 55 wt.%, even more preferably of about 35 to 55 wt.% and most preferably of about 40 to 53 wt.%, all based on the total weight of the corrosion protecting composition.

In one embodiment, the filler comprises an organic filler. Fillers of an organic nature can be, but are not limited to, cellulose, polystyrene, polyvinyl chloride, polyethene, polypropene, polyisoprene, rubber, polyamide and polyester or mixtures thereof. Polyethene and polypropene may be present in the amorphous polymer composition that is part of the corrosion protecting composition. In one embodiment, the organic filler is a polymeric filler. When said polymers are applied as a filler material, the requirements of, *e.g.*, glass transition temperature or molecular weight as specified for the amorphous polymer composition do not have to be met. Syndiotactic polypropene with a glass transition temperature higher than -20 °C may be used as a filler.

In one embodiment, the composition comprises a polymeric filler in the amount of at least about 0.1 wt.%, at least about 0.2 wt.%, at least about 0.3 wt.%, at least about 0.4 wt.%, at least about 0.5 wt.%, at least about 0.6 wt.%, at least about 0.7 wt.%, at least about 0.8 wt.%, at least about 0.9 wt.%, at least about 1 wt.%, at least about 1.5 wt.%, or at least about 2.0 wt.% of the water-absorbing filler, based on the total weight of the composition. In one embodiment, the composition comprises a polymeric filler in the amount of about 0.1 to 10.0 wt.%, about 0.2 to 8.0 wt.%, about 0.3 to 6.0 wt.%, about 0.4 to 5.0 wt.% or about 0.5 to 2.5 wt.% of the polymeric water-absorbing filler, based on the total weight of the composition.

In one embodiment, the composition comprises both at least one non-polymeric absorbing filler in the amounts mentioned above and at least one polymeric water-absorbing filler in the amounts mentioned above.

In one embodiment, the filler comprises an inorganic filler. Examples of inorganic fillers are inorganic minerals, salts and/or oxides, such as, for example, calcium carbonate, calcium sulphate, aluminium hydroxide, aluminium oxide, magnesium oxide, silicon dioxide, titanium dioxide, ground quartz, glass, talc, slate and kaolin. In one embodiment, the filler comprises calcium carbonate. In one embodiment, the filler comprises kaolin. In one embodiment, the filler comprises calcium carbonate and kaolin. In one embodiment, the filler comprises calcium carbonate, kaolin and sulpho aluminate cement.

The composition of the invention may comprise one or more additional fillers, which may be of organic, inorganic or inert nature. In one embodiment, the additional filler is an organic filler. In one embodiment, the additional filler is an inorganic filler. In one embodiment, the additional filler is an inert filler, *i.e.*, calcium carbonate. The one or more additional inert fillers may be present in an amount of 0 to about 10 wt.%, preferably about 0.5 to about 8 wt.%, and more preferably about 1 to about 6 wt.%, all based on the total weight of the corrosion protecting composition. In one embodiment, the additional inert filler is present in an amount of 0.5 wt.% or more, 1 wt.% or more, or 2 wt.% or more, all based on the total weight of the corrosion protecting composition.

The total amount of filler present in the corrosion protecting composition, *i.e.*, the total amount of the one or more water-absorbing filler plus the amount of the optional one or more additional fillers, is in the range of 35 to 60 wt.%, preferably 40 to 59 wt.%, more preferably 45 to 58 wt.% and most preferably 50 to 58 wt.%, all based on the total weight of the corrosion protecting composition. In one embodiment, the total amount of filler present in the corrosion protecting composition is at least 30 wt.%, at least 40 wt.%, or at least 50 wt.%, all based on the total weight of the corrosion protecting composition.

The corrosion protecting composition of the invention preferably comprises about 30 to about 60 wt.% of a non-polymeric water-absorbing filler and about 0 wt.% of an additional filler, more preferably about 35 to 53 wt.% of a non-polymeric water-absorbing filler and about 2 to about 7 wt.% of an additional filler, even more preferably about 40 to 53 wt.% of a non-polymeric water-absorbing filler and about 3 to about 6 wt.% of an additional filler, and most preferably about non-polymeric 45 to 53 wt.% of a water-absorbing filler and about 4 to about 6 wt.% of an additional filler, all based on the total weight of the corrosion protecting composition.

In one embodiment, the corrosion protecting composition comprises about 0.1 to about 10.0 wt.% of a polymeric water-absorbing filler and about 0 wt.% of an additional filler, more preferably about 0.2 to about 8.0 wt.% of a polymeric water-absorbing filler and about 2 to about 7 wt.% of an additional filler, even more preferably about 0.3 to about 6.0 wt.% of a polymeric water-absorbing filler and about 3 to about 6 wt.% of an additional filler, and most preferably about 0.4 to about 5.0 wt.% of a polymeric water-absorbing filler and about 4.0 to about 6.0 wt.% of an additional filler, all based on the total weight of the corrosion protecting composition. In one embodiment, the composition comprises about 0.1 to 10.0 wt.% of a polymeric water-absorbing filler, preferably 0.1 to 8 wt.% of a polymeric water-absorbing filler, and more preferable 0.1 to 5 wt.% of a polymeric water-absorbing filler.

In one embodiment mixtures of two or more of any of the above-mentioned fillers in any of the above-mentioned amounts are encompassed by the present invention

## 4.5 ANTIOXIDANT

The corrosion protecting composition of the invention comprises an antioxidant (iii). The antioxidant may be a primary or a secondary antioxidant, a multifunctional antioxidant (*i.e.*, an antioxidant combining primary and secondary antioxidant functions) or a lactone. The antioxidant may comprise a combination of two or more antioxidants. In one embodiment, the corrosion protecting composition comprises two antioxidants. In one embodiment, the corrosion protecting composition comprises three antioxidants.

The optional one or more antioxidants may be present in an amount of about 0.05 to about 5 wt.%, preferably about 0.1 to about 4 wt.%, more preferably of about 0.2 to about 3 wt.% and most preferably about 0.3 to about 2 wt.%, all based on the total weight of the composition of the invention. In one embodiment, the one or more antioxidants are present in an amount of about 0.1 wt.%, 0.2 wt.%, 0.3 wt.%, 0.4 wt.%, 0.5 wt.%, 0.6 wt.%, 0.7 wt.%, 0.8 wt.%, 0.9 wt.% or 1 wt.%, based on the total weight of the composition of the invention. In one embodiment, the one or more antioxidants are present in an amount of about 0.3 wt.%.

According to the invention, the primary antioxidants are preferably selected from the group consisting of sterically hindered phenol compounds, sterically hindered alkylthiomethylphenol or arylthiomethylphenol compounds, and secondary aromatic amines. Such compounds are well known in the art and include the sterically hindered phenol compounds 2,6-di-t-butyl-4-methylphenol, Irganox® 1330, Irganox® 1010, Irganox® 1098, Irganox® 1076, Irganox® 245, Irganox® 259, Irganox® 1035, Irganox® 2246, Irganox® 3114 and Irganox® 3125, the sterically hindered alkylthiomethylphenol Irganox® 1520, *i.e.,* 2,4-di-octylthiomethyl-6-methyl phenol, and the secondary aromatic based antioxidant comprising (polymerized) 1,2-dihydro-2,2,4-trimethylquinoline, such as for example Agerite® MA.

According to the invention, the secondary antioxidants are preferably selected from the group consisting of phosphites and thio-esters. Suitable secondary antioxidants are for example Irgafos® 168, Irgafos® 12 and Irgafos® P-EPQ (all phosphites), and Lowinox® TBM-6, BNX®DLTDP (CAS No. 123-28-4) and Morstille 18 DSTDP (all thio-esters).

The multifunctional antioxidant preferably comprises a primary and a secondary anti-oxidant function. Examples of multifunctional antioxidants are Irganox® L 115 and Irganox® 565.

An example of a lactone that can be used as antioxidant is Irganox® HP-136.

According to the invention, the composition preferably comprises a primary antioxidant, wherein the primary antioxidant is preferably selected from the group of sterically hindered phenol compounds and secondary aromatic amines, most preferably from the group of sterically hindered phenol compounds.

The composition may comprise a secondary antioxidant, wherein the secondary antioxidant is preferably selected from the group of phosphites.

In one embodiment, the composition comprises a combination of a primary antioxidant and a secondary antioxidant, preferably a combination of a primary and a secondary antioxidant, which have a synergistic effect. A suitable combination is Irganox® 1010 and Irgafos® 168.

In one embodiment, the composition comprises a combination of a primary antioxidant, a secondary antioxidant and a lactone. In one embodiment, the lactone is Irganox® HP-136.

Further examples of primary antioxidants, secondary antioxidants, multifunctional antioxidants and lactones are for example disclosed in WO 2005/005528.

## 4.6 PROCESS

The invention also relates to a process for the protection against corrosion of an article, wherein a corrosion protecting composition of the invention is applied to the surface of the article. The present invention solves the problem by further providing, for example, a process for the protection against corrosion of the articles to be protected.

The corrosion protecting composition can be applied as a film, coating or covering. In one embodiment, the corrosion protecting composition is applied in form of a layer. The article can be in a dry, moist, wet, immersed or submerged environment during the application of said layer of corrosion protecting composition. In one embodiment, the article is in a wet environment during the application of the layer of corrosion protecting composition.

The invention relates to a process for the protection against corrosion of an article, comprising, in the following order, the steps of: (a) application of a layer of a corrosion protecting composition comprising: (i) an amorphous polymer composition comprising an amorphous polymer having a glass transition temperature of -20 °C or less as determined by DSC and wherein the amorphous polymer has an average molecular weight in the range of 1,000 to 3,050,000 g mol$^{-1}$ as determined by gel permeation chromatography, (ii) one or more water-absorbing filler having a water-absorption of 20 wt.% or higher as determined according to the procedure described in standard EN-ISO 10769:2011, wherein the water-absorbing fillers comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises (a) at least 30 wt.% of a non-polymeric water-absorbing filler, and optionally (b) at least 0.1 wt.% of a polymeric water-absorbing filler, all based on the total weight of the composition, and (b) application of a mechanical protective layer on top of said layer of said corrosion protecting composition.

The amorphous polymer has a number average molecular weight $M_n$, a viscosity average molecular weight ($M_v$), or a weight average molecular weight ($M_w$) as described for the amorphous polymer above. Similarly, the molecular weight distribution $M_w/M_n$ of the amorphous polymer is as described above.

The invention provides a process for the protection against corrosion of an article, comprising, in the following order, the steps of: (a) application of a layer of the corrosion protecting composition of the invention; and (b) application of a mechanical protective layer on top of the layer of said corrosion protecting composition; wherein the article is in a dry, moist, wet, immersed or submerged environment during the application of the layer of the corrosion protecting composition of the invention.

In one embodiment, the article is in a moist or wet environment during step (a) of the process, *i.e.*, during the application of said layer of said corrosion protecting composition to a surface of the article. In one embodiment, the article is in a dry environment during step (a) of the process. In one embodiment, the article is in an immersed or submerged environment. The layer of the corrosion protecting composition may be applied to the whole surface of said article, or to a part of the surface.

Due to an improved setting of the corrosion protecting composition of the invention on the article to be protected, including an improved deformity, a very good adhesive tack and adhesive power to the surface of the article, the process can be performed while the article is in a wet environment, *i.e.*, under water, in a splash zone, *etc.*. According to "Corrosion Control of Steel-Fixed Offshore Platforms Associated with Petroleum Production," NACE Standard RP 0176-03, NACE International, Houston, 2003, a "splash zone" is defined as a zone (*e.g.*, of an offshore platform) that is alternately in and out of the influence of tides, waves, winds and seas.

The invention particularly relates to the protection of said article against corrosion. Consequently, it is preferred that the article is essentially made of metal, in particular steel. Alternatively, the surface of the article is essentially made of metal, in particular steel, or concrete, whereas the interior of the article may comprise a different material. The process of the invention is particularly suitable for the protection against corrosion of oil or gas lines or pipes and risers of oil drilling and production rigs or platforms. However, the process of the invention also protects the article against mechanical external influences, such as for example vibrations and shocks, *e.g.*, caused by wave action.

The article that is protected by the process of the invention may be in a wet or moist environment, *e.g.*, a marine environment. Herein, an article in a wet environment is defined as an article, wherein a surface of the article, or part thereof, is wet, *i.e.*, water is present on a surface of the article or part thereof, or the surface of the article is situated under water. An article in a moist environment is defined as an article, wherein a surface of the article, or part thereof, is slightly or moderately wet.

The article may be wholly or partly submerged in water, *e.g.*, a submerged oil or gas pipeline, a riser of a drilling or production rig or platform, or an article situated in the so called splash zone that is situated (partly) above water but may be wet due to wave or tide action, *etc.* In one embodiment, the article in a wet environment is a submerged article, such as for example an oil or gas pipe or line that is located under water. In one embodiment, the article in a wet environment is a partly submerged article, such as for example a riser of an oil drilling or production rig or platform that is located at sea, or an oil pipe or line that is partly located under water. In another embodiment, the article in a wet environment is an article that is situated in a splash zone.

Alternatively, the article may be in a wet environment due to condensation of water from the environment on a surface of the article, resulting in the presence of water on a surface of the article or part thereof. An example of such an article is a sweating pipeline, *i.e.,* a pipeline on the surface whereof water is present due to condensation from the environment, or a gutter. In one embodiment, the article in a wet environment is a sweating pipeline or a gutter.

The article protected by the process of the invention may be in a dry environment. Herein, an article in a dry environment is defined as an article, wherein a surface of the article, or part thereof, is not in or under water or free or relatively free from a liquid, especially water.

The first step (a) of the process of the invention comprises the application of a layer of a corrosion protecting composition of the invention on a surface of the article. In one embodiment, the corrosion protecting composition is applied to said surface while the surface or part thereof is wet or moist, *i.e.*, water is present on a surface of the article or part thereof, during the execution of step (a) of the process. In one embodiment, the corrosion protecting composition is applied to said surface while the surface or part thereof is dry, *i.e.*, water is essentially not present on a surface of the article or part thereof, during the execution of step (a) of the process. In one embodiment, the corrosion protecting composition is applied to said surface while the humidity of the surface or part thereof is different at different parts, *i.e.*, parts of the surface may be dry whereas other parts of the surface may be moist and/or wet. For example, the inventive corrosion protecting composition may be used for oil rigs or petroleum rigs. The parts of such rigs are exposed to different environmental conditions.

In contrast to processes known from the prior art, the corrosion protecting composition of the invention can be applied directly to the surface of the article.

The process of the invention may be executed on the article when the article is actually situated in the moist or wet environment, without the need to isolate the article from said moist or wet environment. In one embodiment, the process is executed under water, in order to protect a submerged article. Drying of the surface of the article prior to application of the composition of the invention in step (a) of the process is not necessary. In one embodiment, the process is executed above water. In one embodiment, the process is executed on a dry surface of the article.

Extensive pre-treatment of the surface of the article is generally not necessary in the process of the invention. When an article, such as for example a submerged article, is to be protected, in processes known in the art it is often necessary to build a casing around the article and remove any water that is present in the casing. Subsequently, the surface of the article often has to undergo a thorough pre-treatment, *e.g.*, by sand blasting, in order to prepare the surface of the article. These time-consuming and expensive steps are not necessary in the process of the invention, which requires minimal or no surface pre-treatment.

The second step (b) of the process of the invention comprises the application of a compressing and flexible mechanical protective layer. The mechanical protective layer is applied on top of the layer of the corrosion protecting composition of the invention, and covers said layer completely. Application of the mechanical protective layer "on top of" the layer of the corrosion protecting composition means that the mechanical protective layer is situated on the side of the layer of the corrosion protecting composition that is opposite from the side of said layer of corrosion protecting composition that is in contact with the surface of the article to be protected. In one embodiment, the mechanical protective layer is in direct contact with the layer of the corrosion protecting composition. In one embodiment, additional intermittent layers may be present between the layer of the corrosion protecting composition and the mechanical protective layer. The function of the mechanical protective layer is to protect the layer of the composition of the invention that is applied in step (a) of the process. Besides, said mechanical protective layer minimizes voids eventually present underneath the corrosion preventing layer, enables the self-healing effect by generating pre-stress to the material and prevents the corrosion protecting composition from excessive exposure to water, which may result in a deterioration of the composition over time.

The mechanical protective layer may be applied in the form of a tape. Examples of mechanical protective layers include polymer (multilayer) films comprising, *e.g.*, polyethene, polypropene, polyvinyl chloride, polyesters, epoxies, polyurethane or aramide. The polymer films may be laminated with reinforcing fibres, such as, *e.g.*, glass fibres or carbon fibres. Suitable protective layers are, for example, provided by high shear tapes. High shear tapes are well known in the art, and are disclosed in, *e.g.*, US 5817413 and US 6033776.

If a mechanical protective layer is applied with stress to a substrate comprising a protective layer of the composition of the invention, or if the mechanical protective layer shrinks around the substrate, *e.g.*, a pipe, a self-repairing effect may be obtained whereby defects in the protective layer are repaired in the course of time. The protective layer then exerts continuous stress on the layer of the composition of the invention. If the protective layer sustains a minor damage, this stress ensures a flow of the composition of the invention towards the damaged site, resulting in the covering of any exposed surface of the underlying substrate.

An example of a suitable mechanical protective layer is a glass fiber reinforced polyurea layer. Such a protective layer serves as a rigid mechanical reinforcement of the layer of corrosion protecting composition, protecting said layer against impacts and indentations from, *e.g.*, driftwood, boat landings, *etc.*. In a preferred embodiment, a watertight layer is applied over said mechanical protective layer. In another preferred embodiment, said mechanical protective layer is itself a watertight layer. In another preferred embodiment, two different layers are applied on top of the layer of corrosion protecting composition, wherein the first layer, *i.e.*, a layer in direct contact with the layer of corrosion protecting composition, is a flexible tape and the second layer, *i.e.*, a layer that is in direct contact with said flexible tape, is an additional rigid mechanical layer, for example of glass fibre reinforced polyurea.

The process may also be performed by the application of a tape of the invention to the surface of the article, the tape comprising a layer of the corrosion protecting composition of the invention. Hence, the invention further relates to a process of the invention, wherein in step (a) a tape is applied on the surface of the article, wherein the tape comprises a layer comprising a corrosion protecting composition of the invention comprising. The corrosion protecting composition of the invention is described in detail above.

In one embodiment, the process comprises, in the following order, the steps of (a) application of a tape of the invention and (b) application of a mechanical protective layer on top of the layer of said corrosion protecting composition. In another embodiment, the process comprises, in the following order, the steps of (a) application of a tape of the invention and (b) application of a mechanical protective layer on top of the layer of said corrosion protecting composition, wherein the article is in a dry or wet environment during the application of the tape (a) or layer (b).

The mechanical protective layer for the protection of the layer of the composition of the invention may be comprised in the tape. In that case step (b) of the process of the invention is also executed by the application of said tape on the surface of the article, thus step (a) and step (b) of the process of the invention are in that case executed simultaneously.

### 4.7 TAPE

The invention also relates to a tape for the protection of an article against corrosion, wherein the tape comprises a layer comprising a corrosion protecting composition of the invention. Thus, the present invention also solves the problem by providing tapes for the protection against corrosion of articles.

Provided herein is a tape comprising a layer comprising a corrosion protecting composition comprising: (i) an amorphous polymer composition comprising an amorphous polymer having a glass transition temperature of -20 °C or less as determined by DSC and wherein the amorphous polymer has an average molecular weight in the range of 1,000 to 3,050,000 g mol$^{-1}$ as determined by gel permeation chromatography, (ii) one or more water-absorbing fillers having a water-absorption of 20 wt.% or higher as determined according to the procedure described in standard EN-ISO 10769:2011, wherein the water-absorbing fillers comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises a) at least 30 wt.% of a non-polymeric water-absorbing filler, and optionally (b) at least 0.1 wt.% of a polymeric water-absorbing filler, based on the total weight of the composition.

In a preferred embodiment of the tape of the invention, the amorphous polymer is selected from the group consisting of:

(a) a polymer comprising about 50.0 % to about 98 % by weight of isobutene and about 2 % to about 50.0 % of a $C_2$ - $C_{12}$ alkene other than isobutene, a $C_4$ - $C_{12}$ alkadiene, or a mixture thereof, based on the total weight of the polymer;

(b) a polymer comprising more than about 98 % to about 100 % by weight of isobutene, based on the total weight of the polymer;

(c) a polymer comprising about 50.0 % to about 99.9 % by weight of propene and about 0.1 % to about 50.0 % of a $C_2$ - $C_{12}$ alkene other than propene, a $C_4$ - $C_{12}$ alkadiene, or a mixture thereof, or about 100 wt.% propene, based on the total weight of the polymer;

(d) a polymer comprising about 0.1 % to about 50.0 % by weight of ethene and about 50.0 % to about 99.9 % of a $C_2$ - $C_{12}$ alkene other than ethene, a $C_4$ - $C_{12}$ alkadiene, or a mixture thereof, based on the total weight of the polymer;

(e) a polymer comprising about 0.1 % to about 50.0 % by weight of 2-methyl-1-pentene and about 50.0 % to about 99.9 % of a $C_2$ - $C_{12}$ alkene other than 2-methyl-1-pentene, a $C_4$ - $C_{12}$ alkadiene, or a mixture thereof, or about 100 wt.% 2-methyl-1-pentene, based on the total weight of the polymer; and

(f) mixtures of (a), (b), (c), (d) and/or (e).

In a preferred embodiment, the amorphous polymer is selected from the group consisting of (a) and (b), and a mixture thereof.

The amorphous polymer has a number average molecular weight ($M_n$), a viscosity average molecular weight $M_v$, or a weight average molecular weight $M_w$ as described for the amorphous polymer above. Similarly, the molecular weight distribution $M_w/M_n$ of the amorphous polymer is as described above.

In one embodiment, the tape is applied to the article to be protected while the article is in a dry environment. In one embodiment, the tape is applied to the article while the article is in a wet or moist environment. In other words, the tape can be applied to a surface of the article while the surface or part thereof is wet or moist, *i.e.*, water is present on a surface of the article or part thereof, during application of the tape. Hence, drying the surface of the article prior to application of the tape is not necessary. The tape can directly be applied to a (partly) submerged article, to an article in a splash zone, or to an article that has a wet surface due to, e.g., condensation of moisture on the surface of the article, such as a sweating pipeline. The surface of the article to be protected generally does not need extensive pre-treatment. The tape can be easily applied to the article to be protected against corrosion since the layer of the composition of the invention can easily be deformed. Moreover, after being applied, the tape can also easily be removed. Although due to cohesive breakage it does leave some residuals on the surface of the metal article, these residuals can be easily removed by scraping. The tape of the invention can be used for repairing damaged or corroded metal articles that were already provided with some protecting material according to the state of the art, provided that the surface of the metal article is cleaned to a St-2 level according to the ISO standard 8501-1. Finally, as described above, the tape has self-repairing properties due to the fluid and/or visco-elastic nature of the layer of the corrosion protecting composition of the invention.

In one embodiment, the tape may be applied while parts of the article are in a wet or moist environment while other parts of the article are in a dry environment.

In one embodiment, the tape comprises a further layer (b) to protect layer (a). The further layer (b) may be a mechanical protective layer. When transported such a protecting layer (b) enables that the tape can easily be winded on a bobbin or spool or other suitable means, and prevents inter-adhesion of the layers of the tape. The protective layer accelerates completion of adhesion of the composition to the substrate of tubular objects, because such mechanical protective layers are wrapped with tension.

Provided herein is a tape comprising the corrosion protecting composition of the invention. According to the invention the tape comprises (a) a first layer comprising a corrosion protecting composition comprising: (i) an amorphous polymer composition comprising an amorphous polymer having a glass transition temperature of -20 °C or less as determined by DSC and wherein the amorphous polymer has an average molecular weight in the range of 1,000 to 3,050,000 g mol$^{-1}$ as determined by gel permeation chromatography, (ii) one or more water-absorbing fillers having a water-absorption of 20 wt.% or higher as determined according to the procedure described in standard EN-ISO 10769:2011, wherein the water-absorbing fillers comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises a) at least 30 wt.% of a non-polymeric water-absorbing filler, and optionally (b) at least 0.1 wt.% of a polymeric water-absorbing filler, based on the total weight of the composition, and (b) a second layer to protect layer (a). In one embodiment, the composition comprises about 30 to about 70 wt.%, about 30 to about 60 wt.%, about 40 to about 50 wt.%, about 40 to about 60 wt.%, or about 40 to about 70 wt.% of the amorphous polymer composition based on the total weight of the composition.

The amorphous polymer has a number average molecular weight ($M_n$), a viscosity average molecular weight ($M_v$), or a weight average molecular weight ($M_w$) as described for the amorphous polymer above. Similarly, the molecular weight distribution $M_w/M_n$ of the amorphous polymer is as described above.

Layer (b) may have the function of a release liner, which is removed from the tape during application of the tape. Layer (b) may then comprise any suitable material for a release liner, *e.g.*, paper, an $C_2$-$C_{20}$ alkene polymer or copolymer, *etc.* Alternatively, layer (b) may comprise a polyvinyl chloride film having a siliconized outer surface. When such a layer (b) is present, the presence of an additional release liner is not necessary. In addition, said layer also serves as a separation layer in order to increase easy of application and as a layer to enable proper adhesion of a subsequently applied mechanical protective layer.

In a specific embodiment, the tape comprises a further layer (c), wherein layer (c) preferably comprises a film comprising a polymer or a copolymer of one or more $C_2$-$C_{20}$ $\alpha$-alkenes and/or alkadienes, a polyvinyl chloride (PVC), a polyurethane, or a non-woven polyester cloth, as is described in more detail below.

Layer (c), if present, is situated on the other side of layer (a) than the side where layer (b) is situated. The order of the layers in the tape is then (b) - (a) - (c), wherein layer (a) is positioned in between (b) and (c), and wherein layer (b) faces the environment. The invention thus also provides a tape comprising: (a) a first layer comprising a corrosion protecting composition comprising: (i) an amorphous polymer composition comprising an amorphous polymer having a glass transition temperature of -20 °C or less as determined by DSC and wherein the amorphous polymer has an average molecular weight in the range of 1,000 to 3,050,000 g mol$^{-1}$ as determined by gel permeation chromatography, (ii) one or more water-absorbing fillers having a water-absorption of 20 wt.% or higher as determined according to the procedure described in standard EN-ISO 10769:2011, wherein the water-absorbing fillers comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises a) at least 30 wt.% of a non-polymeric water-absorbing filler, and optionally (b) at least 0.1 wt.% of a polymeric water-absorbing filler, based on the total weight of the composition, and (b) a second layer (b) to protect layer (a); and (c) a layer comprising a film comprising a polymer or a copolymer of one or more $C_2$-$C_{20}$ α-alkenes and/or alkadienes, a polyvinyl chloride (PVC), a polyurethane, or a non-woven polyester cloth. Layer (c) serves as a separation layer in order to increase ease of application, but also as a layer to enable proper adhesion of a subsequently applied mechanical protective layer. In one embodiment, the composition comprises about 30 to about 70 wt.%, about 30 to about 60 wt.%, about 40 to about 50 wt.%, about 40 to about 60 wt.%, or about 40 to about 70 wt.% of the amorphous polymer composition based on the total weight of the composition.

The tape preferably has, embedded in layer (a), a component (d) comprising a reinforcing net-like structure having a woven, knitted or spool-knitted structure, that can preferably be deformed in two orthogonal directions. The reinforcing net-like structure may be manufactured from, *e.g.*, polyester or from polyolefin fibres, *e.g.*, fibres made from ethane homopolymers or copolymers or propene homopolymers or copolymers, as is well known in the art. The invention thus also relates to a tape comprising: (a) a first layer comprising a corrosion protecting composition comprising: (i) an amorphous polymer composition comprising an amorphous polymer having a glass transition temperature of -20 °C or less as determined by DSC and wherein the amorphous polymer has an average molecular weight in the range of 1,000 to 3,050,000 g mol$^{-1}$ as determined by gel permeation chromatography, (ii) one or more water-absorbing fillers having a water-absorption of 20 wt.% or higher as determined according to the procedure described in standard EN-ISO 10769:2011, wherein the water-absorbing fillers comprise a non-polymeric filler that binds water by a chemical reaction, and (iii) an antioxidant, wherein the composition comprises about 30 to 70 wt.% of the amorphous polymer composition based on the total weight of the composition; and wherein the composition comprises a) at least 30 wt.% of a non-polymeric water-absorbing filler, and optionally (b) at least 0.1 wt.% of a polymeric water-absorbing filler, based on the total weight of the composition, (b) a second layer to protect layer (a); (c) optionally, a layer comprising a film comprising a polymer or a copolymer of one or more $C_2$-$C_{20}$ α-alkene and/or dialkenes, a polyvinyl chloride (PVC), a polyurethane, or a non-woven polyester cloth; and (d) a reinforcing net-like structure, embedded in layer (a). In said tape the layers thus are situated in the order (b) - [(a)+(d)], wherein layer (b) faces the environment. If said layer (c) is present, the order of the layers in the tape is thus (b) - [(a)+(d)] - (c), wherein layer (b) faces the environment. In one embodiment, the composition comprises about 30 to about 70 wt.%, about 30 to about 60 wt.%, about 40 to about 50 wt.%, about 40 to about 60 wt.%, or about 40 to about 70 wt.% of the amorphous polymer composition based on the total weight of the composition.

Layer (c) of the tape preferably comprises a film comprising a polymer or a copolymer of one or more $C_2$-$C_{20}$ α-alkene and/or dialkenes, a polyvinyl chloride (PVC), a polyurethane, or a non-woven polyester cloth. Examples of such polymers and copolymers are EP(D)M elastomers, ethylene homopolymers, ethylene-α-alkene copolymers, propylene homopolymers and propylene-α-alkene copolymers, in particular propylene-ethylene copolymers which may contain high amounts of propylene, e.g., more than 80 wt.%, based on the total weight of the copolymer, or low amounts of propylene, *e.g.*, less than 20 wt.%, based on the total weight of the copolymer. If the copolymer is an ethylene copolymer, which is a preferred embodiment of the invention, the $C_2$-$C_{20}$ α-alkene is then preferably a $C_3$-$C_{12}$ α-alkene, in particular a $C_3$-$C_8$ α-alkene. Examples of suitable α-alkenes are propene, 1-butene, 1-hexene and 1-octene. The ethylene copolymers preferably comprise 0.1 to 30 wt.%, in particular 0.1 to 20 wt.% α-alkene. The density of the ethylene homopolymers or copolymers (as measured according to ASTM D 1248) is preferably 0.800 - 0.975 g/cm$^3$, in particular 0.850 - 0.950 g/cm$^3$. The melt index (as measured according to ASTM D 1238) of the ethylene homopolymers or copolymers is preferably 0.1 to 50 g/min, in particular 0.2 to 20 g/min. Layer (c) of the tape comprises preferably one or more of the following polymers: low density polyethylene (LDPE), linear low density polyethylene (LLDPE), high density polyethylene (HDPE), an ethene propene copolymer, an ethene propene diene copolymer. According to a preferred embodiment of the invention, layer (c) of the tape comprises LDPE, HDPE or LLDPE or a combination thereof. It is furthermore preferred that the materials employed for layer (c) are manufactured in a metallocene catalyzed polymerization process.

Layer (c) may comprise more than one layer and can, for example, be a multilayer film comprising of LLDPE outer layers and a HDPE inner layer. Such multilayer films are well known in the art. Layer (c) may further comprise different additives such as pigments and fillers.

In addition to the above-mentioned layers, the tape of the invention may comprise one or more additional layers, which may provide further properties to the inventive tape.

The tape of the invention has preferably a total thickness of about 1 to about 20 mm, more preferably of about 1 to about 15 mm, even more preferably of about 1 to about 10 mm and most preferably of about 1 to about 7 mm. The width of the tape can obviously be adjusted as desired or as suitable, but is preferably about 2.0 to about 100.0 cm, more preferably about 2.5 to about 75.0 cm, even more preferably about 3.0 to about 70.0 cm, even more preferably about 4.0 to about 65.0 cm and most preferably about 5.0 to about 60.0 cm. The length of the tape can obviously also be adjusted as desired or as suitable. A tape with a length of for example several meters may be wound around a bobbin or spool prior to use. However, the tape may also be in the form of a sheet. The length and width of said sheet can be adjusted as desired or as suitable.

The thickness of layer (c) is preferably about 10 $\mu$m to about 500 $\mu$m, more preferably about 20 $\mu$m to about 300 $\mu$m.

The invention also relates to a process for the protection against corrosion of an article comprising the step of applying a tape of the invention to the surface of the article. In one embodiment, the tape is applied to the article in a moist or wet environment. In one embodiment, the tape is applied to the article in a dry environment. In one embodiment, the tape is applied to the article in a dry and moist or wet environment.

In addition, the invention relates to a process for the manufacture of a tape for the protection of an article against corrosion, wherein a composition of the invention is laminated onto a film, said film preferably comprising a polymer or a copolymer of one or more $C_2$-$C_{20}$ $\alpha$-alkene and/or alkadienes, a polyvinyl chloride (PVC), a polyurethane, or a non-woven polyester cloth as defined above for layer (c) of the tape of the invention.

After said lamination step, the surface of layer (a) not being in contact with layer (c) is preferably protected by a layer (b), wherein layer (b) may be any suitable material that comprises, *e.g.*, an alkene polymer or copolymer, paper and the like. Optionally, a component (d) is present embedded in layer (a) as described above.

After the tape is manufactured, it is preferably wrapped around a bobbin, a spool or a similar suitable means for easy transportation to the location where it is used.

Finally, the inventors have noted that with tapes known in the art corrosion occurs in the areas of overlap between different windings ("spiral corrosion") because in the areas of overlap the rather stiff windings are not in intimate contact so that occlusion of water occurs. Such problems do, however, not occur with the tape of the invention because of the fluid and/or visco-elastic nature of layer (a) and because the composition is able to absorb water.

## 4.8 PROTECTED ARTICLE

The invention further relates to an article, obtainable by the process of the invention. Provided herein is an article, comprising (a) (i) a layer of a corrosion protecting composition of the invention, and (ii) a mechanical protective layer to protect said layer of said composition; or (b) the tape of the invention. In one embodiment, the article comprises additional layers. In one embodiment, one or more layers are water permeable. In one embodiment, one or more layers are watertight. In one embodiment, the mechanical protective layer (b) is watertight.

The mechanical protective layer (b) is applied on top of the layer of the corrosion protecting layer (a), covering it completely. The mechanical protective layer (b) may be applied separately to the article of the invention. Suitable protecting layers are for example provided by high shear tapes, which are well known in the art. High shear tapes are for example disclosed in US 5817413 and US 6033776.

The layer (a) of the corrosion protecting composition of the invention may be comprised in a tape of the invention. The mechanical protective layer (b) may also be comprised in said tape. In one embodiment, the article comprises one or more tapes of the invention. In said article, the surface of the article is covered by said tape.

In a preferred embodiment, the article is essentially made of metal, in particular steel, or concrete. Alternatively, the surface of the article is essentially made of metal, in particular steel, or concrete, whereas the interior of the article may comprise a different material. The article may, for example, be a tubular article such as a gas or oil pipe or line. The article may also be a riser of an oil drilling or production rig or platform, a piller foundation or pier of, *e.g.*, a bridge, a buttress foundation of a dam, a concrete wall, *etc.*. Particular embodiments of the invention will now be described more fully by the following examples.

## 5. EXAMPLES

### 5.1 Corrosion protecting compositions

Compositions according to the invention (**Table 1**) were prepared by mixing the components in a paddle mixer at 90 °C.

**Table 1**: Composition of the state of the art corrosion protecting composition (A) compared to the corrosion protecting composition of the invention (B); amounts are represented in wt.%.

| Composition | A | B |
|---|---|---|
| Polyisobutene, mid-molecular weight | 20,4% | 42% |
| Polyisobutene, low-molecular weight | 10,4% | - |
| Petrolatum | 4,9% | - |
| Antioxidant A | 0,25% | 0,3% |
| Antioxidant B | 0,25% | 0,3% |
| Pigment | 0,31% | 0,3% |
| Inert filler | 1,5% | - |
| Quartz | 30,5% | - |
| Surfactant | 2,9% | - |
| Reversible water-absorbing filler | 25,5% | 20% |
| Irreversible water-binding filler | 3,1% | 31% |
| Calcium carbonate | - | 6% |

**5.2 *Water-absorption of the corrosion protecting composition***

The water-absorption of the corrosion protecting composition is determined using the procedure according to ASTM D570, adapted for the corrosion protecting composition.

A plastic cup having a known depth in the range of 15 to 25 mm and a surface with a known diameter (round surface) or a known length and width (rectangular or square surface) in the range of 30 to 50 mm is weighed (mass A). Herein, a cup having a depth of 20 mm and a round surface with a diameter of 44 mm was used. Said cup is filled completely with the corrosion protecting composition, avoiding air entrapments. The surface is smoothed using a putty knife. The cup filled with corrosion protecting composition is weighed (mass B).

Subsequently, the filled cup is placed in a container of distilled water maintained at a temperature of 23 $\pm$ 1 °C. The filled cup should be completely submerged. The container comprising the cup is then placed in a climate cabinet and the water temperature is maintained at 23 $\pm$ 1 °C for 72 hours. After 72 hours of immersion the cup is taken out of the container, its surfaces are dried with tissue paper and the dried cup is weighed (mass C).

The water-absorption, expressed in wt.%, is calculated as followed:

$$w_A = \frac{[(C - A) - (B - A)]}{(B - A)} * 100\%$$

The water-absorption (g/m²) is calculated as followed:

$$w_A \ (g/m^2) = \frac{[(C - A) - (B - A)]}{\text{surface of cup}} * 100\%$$

As is known to a skilled person, the method to calculate the surface of said cup depends on the shape of the surface. A circular surface equals $\pi r^2$, wherein r is the radius of the circle, and a quadrangular surface equals l*w, wherein l is the length and w is the width of the surface.

As long as the depth of the cup used to determine the water-absorption (g/m²) is larger than the minimum depth as described above, the water-absorption (g/m²) thus determined will be independent of the mass (B-A) of the corrosion protecting composition that was employed in the determination of the water-absorption (g/m²).

The water absorption (g/m²), $w_A$ (g/m²), of exemplary composition (B) of the invention, comprising 42 wt.% of a polyisobutene, 6 wt.% of a non-water-absorbing filler (calcium carbonate), 20 wt.% of a reversible, water-absorbing filler, 31 wt.% of an irreversible, water-binding filler, 0.3 wt.% of an antioxidant A, 0.3 wt.% of an antioxidant B, and 0.3 wt.% of a pigment was determined according to the procedure described above. The water-absorption (g/m²) for compositions of the invention as determined after 72 hours immersion in distilled water at 23 $\pm$ 1 °C was in the range of about 150 to 400 g/m² (*see*, **Table 2**).

### 5.3 *Viscosity of the corrosion protecting composition*

The viscosity at a shear rate of 2.4 s⁻¹ (Pa.s) at 70 °C of a composition of the invention, comprising 42 wt.% of a polyisobutene, 6 wt.% of a non-water-absorbing filler (calcium carbonate), 20 wt.% of a reversible, water-binding filler, 31 wt.% of an irreversible water-absorbing filler, 0.3 wt.% of an antioxidant A, 0.3 wt.% of an antioxidant B, and 0.3 wt.% of a pigment was determined as described in ISO 3219.

The viscosity for compositions of the invention was in the range of about 9000 to about 11000 Pa.s *(see,* **Table 2**).

**Table 2: Determination of QC parameters.** Viscosity and water-absorption were determined for state of the art corrosion protecting composition (A) and corrosion protecting composition of the invention (B).

| Property | Method | A | B |
|---|---|---|---|
| Viscosity at 2.4 s⁻¹ | ISO 3219 | at 50 °C: 3600 - 4300 Pa.s | at 70 °C: 9000 - 11000 Pa.s |
| Water absorption after 72 h at 23 °C | ASTM D570 modified | 2500 - 6000 g/m² | 150 - 400 g/m² |

The composition of the invention showed improved viscosity at 70 °C and water-absorbing properties.

### 5.4 *Adhesion of the corrosion protecting composition*

Adhesion of coating applied to dry and wet pipe surface was tested according to peel-strength test as described in ISO 21809-3 (2016) annex H, M.3 and I. Peel strength was measured and afterwards the test specimens were inspected for occurrence of cohesive fracture (desired property), absence of adhesive failure and remaining film on the substrate. The product was applied to dry de-rusted carbon steel St 2 / St 3 cleanliness grade (*see,* **Table 3**) or wet de-rusted carbon steel St 2 / St 3 cleanliness grade, immersed in 3% NaCl solution (*see,* **Table 4**).

**Table 3: Peel Test on de-rusted carbon steel.** Adhesion of state of the art corrosion protecting composition (A) compared to corrosion protecting composition of the invention (B). The ambient temperature corresponds to a temperature of 23 °C.

| Peel test at ambient temperature | Acceptance criteria | Method | A | B |
|---|---|---|---|---|
| Before ageing | Peel strength ≥ 0,04 N/mm | ISO 21809-3: 2016 Annex H | 0,10 N/mm; CS; ≥ 99% | 0,23 N/mm; CS; ≥ 99% |
| After thermal ageing for 100 days at T$_{max+20}$ °C | Cohesive separation mode (CS) | ISO 21809-3: 2016 Annex M.3 | 0,34 N/mm; CS; ≥ 95% | 0,15 N/mm; CS; ≥ 99% |
| After hot water immersion for 100 days at T$_{max+20}$ °C | Substrate coverage ≥ 95% | ISO 21809-3: 2016 Annex I and H | 0,18 N/mm; CS; ≥ 95% | 0,35 N/mm; CS; ≥ 95% |
| **Peel test at *Tmax*** | **Acceptance criteria** | **Method** | **50 °C** | **70 °C** |
| Before ageing | Peel strength ≥ 0,02 N/mm | ISO 21809-3: 2016 Annex H | 0,03 N/mm; CS; ≥ 95% | 0,03 N/mm; CS; ≥ 99% |
| After thermal ageing for 100 days at Tmax+20 °C | Cohesive separation mode (CS) | ISO 21809-3: 2016 Annex M.3 | no data | 0,05 N/mm; CS; ≥ 99% |
| After hot water immersion for 100 days at Tmax+20 °C | Substrate coverage ≥ 95% | ISO 21809-3: 2016 Annex I and H | no data | 0,15 N/mm; CS; ≥ 95% |

**Table 4: Peel Test on de-rusted carbon steel, immersed in 3% NaCl solution.** Adhesion of state of the art corrosion protecting composition (A) compared to corrosion protecting composition of the invention (B). The ambient temperature refers to a temperature of 23 °C.

| Peel test at ambient temperature | Acceptance criteria | Method | A | B |
|---|---|---|---|---|
| Before ageing | Peel strength ≥ 0,04 N/mm Cohesive separation mode (CS) | ISO 21809-3: 2016 Annex H | 0,08 N/mm; CS; ≥ 99% | 0,33 N/mm; CS; ≥ 99% |
| After thermal ageing for 100 days at Tmax+20 °C | Substrate coverage ≥ 95% | ISO 21809-3: 2016 Annex M.3 | 0,21 N/mm; CS; ≥ 95% | 0,15 N/mm; CS; ≥ 99% |
| After hot water immersion for 100 days at Tmax+20 °C | | ISO 21809-3: 2016 Annex I and H | 0,44 N/mm; | 0,35 N/mm; CS; ≥ 95% |
| | | | CS; ≥ 99% | |
| **Peel test at T*max*** | **Acceptance criteria** | **Method** | **50 °C** | **70 °C** |
| Before ageing | Peel strength ≥ 0,02 N/mm Cohesive separation mode (CS) | ISO 21809-3: 2016 Annex H | 0,04 N/mm; CS; ≥ 95% | 0,04 N/mm; CS; ≥ 99% |
| After thermal ageing for 100 days at Tmax+20 °C | Substrate coverage >_ 95% | ISO 21809-3: 2016 Annex M.3 | no data | 0,04 N/mm; CS; ≥ 99% |
| After hot water immersion for 100 days at Tmax+20 °C | | ISO 21809-3: 2016 Annex I and H | no data | 0,15 N/mm; CS; ≥ 95% |

The results in **Tables 3** and **4** indicate improved adhesion properties of the corrosion protecting composition of the invention on dry and wet surfaces compared to composition (A).

Adhesion of coating applied to dry and wet existing neoprene surface was tested according to peel-strength test as described above. Peel strength was measured and afterwards the test specimens were inspected as described above. The product was applied to dry existing neoprene coating (*see*, **Table 5**) or wet existing neoprene coating, immersed in 3% NaCl solution (*see*, **Table 6**).

**Table 5: Peel test on dry existing neoprene coating**. Adhesion of state of the art corrosion protecting composition (A) compared to corrosion protecting composition of the invention (B) on dry existing neoprene coating. The ambient temperature refers to a temperature of 23 °C.

| Peel test at ambient temperature | Acceptance criteria | Method | A | B |
|---|---|---|---|---|
| Before ageing | Peel strength ≥ 0,04 N/mm | ISO 21809-3: 2016 Annex H | 0,08 N/mm; CS; ≥ 99% | 0,26 N/mm; CS; ≥ 99% |
| After thermal ageing for 100 days at Tmax+20 °C | Cohesive separation mode (CS) | ISO 21809-3: 2016 Annex M.3 | 0,17 N/mm; CS; ≥ 99% | 0,16 N/mm; CS; ≥ 99% |
| After hot water immersion for 100 days at Tmax+20 °C | Substrate coverage ≥ 95% | ISO 21809-3: 2016 Annex I and H | 0,16 N/mm; CS; ≥ 95% | no data |

**Table 6: Peel test on wet existing neoprene coating.** Adhesion of state of the art corrosion protecting composition (A) compared to corrosion protecting composition of the invention (B) on dry existing neoprene coating. The product was applied to wet existing neoprene coating immersed in 3% NaCl solution. The ambient temperature refers to a temperature of 23 °C.

| Peel test at ambient temperature | Acceptance criteria | Method | A | B |
|---|---|---|---|---|
| Before ageing | Peel strength ≥ 0,04 N/mm | ISO 21809-3: 2016 Annex H | 0,08 N/mm; CS; ≥ 99% | 0,19 N/mm; CS; ≥ 99% |
| After thermal ageing for 100 days at Tmax+20 °C | Cohesive separation mode (CS) | ISO 21809-3: 2016 Annex M.3 | 0,15 N/mm; CS; ≥ 99% | 0,13 N/mm; CS; ≥ 99% |
| After hot water immersion for 100 days at Tmax+20 °C | Substrate coverage ≥ 95% | ISO 21809-3: 2016 Annex I and H | 0,15 N/mm; CS; ≥ 99% | no data |

The results in **Tables 5** and **6** indicate improved adhesion properties of the corrosion protecting composition on dry and wet existing neoprene coating.

### 5.5 *Drip resistance of the corrosion protecting composition*

Drip resistance test was tested according to ISO 201809-3 (2016) annex K at various increasing temperatures. The data show that no dripping for the corrosion protecting composition of the invention was observed at $T_{max}$+20 °C (minimum 80°). The performance parameters were tested on the composition in tape form and the results of the comparative study with compound A are summarized in **Table 7**.

**Table 7: Drip resistance.** State of the art corrosion protecting composition (A) compared to corrosion protecting composition of the invention (B).

| Property | Acceptance criteria | Method | A | B |
|---|---|---|---|---|
| Drip resistance | No dripping of compound at Tmax+20 °C (minimum 80°) | ISO 21809-3: 2016 Annex K | No dripping at 80 °C | No dripping at 100 °C |

The results in **Table 7** indicate that the corrosion protecting compositions of the invention show improved drip resistance.

### 5.6 *Specific electrical insulation resistance and cathodic disbondment resistance of the corrosion protecting composition*

Specific electrical insulation resistance and cathodic disbondment resistance were determined for the corrosion protecting composition as shown below.

The corrosion protecting composition was compared to state of the art composition (A). The results are summarized in **Table 8**.

**Table 8: Specific electrical insulation and cathodic disbondment resistance**. State of the art corrosion protecting composition (A) compared to corrosion protecting composition of the invention (B).

| Property | Acceptance criteria | Method | A | B |
|---|---|---|---|---|
| Specific electrical insulation resistance | Rs100 ≥ 10E+08 $\Omega.m^2$ Rs100/Rs70 ≥ 0.8* | ISO 21809-3 Annex F | Rs100 ≥ 6,9E+09 $\Omega.m^2$ Rs100/Rs70 n.a. | Rs100 ≥ 6,0E+08 $\Omega.m^2$ Rs100/Rs70 n.a. |

(continued)

| Property | Acceptance criteria | Method | A | B |
|---|---|---|---|---|
| Cathodic disbondment resistance after 28 days at 23 °C on dry steel | Disbondment ≤20 mm | ISO 21809-3 Annex G § 13.5.7 | 0 mm | 0 mm |
| * This requirement shall be fulfilled only if the specific electrical insulation resistance after 70 days is less than 10 times the requirement of the specific electrical insulation resistance after 100 days (Rs70 < 1,0E+09 Ω.m2). | | | | |

The results in **Table 8** indicate that the corrosion protecting compositions of the invention has adequate specific electrical insulation resistance and cathodic disbondment resistance.

**Claims**

1. Composition for the protection against corrosion of an article, said composition comprising:

    (i) an amorphous polymer composition comprising an amorphous polymer having a glass transition temperature of -20 °C or less as determined by differential scanning calorimetry (DSC) and wherein the amorphous polymer has an average molecular weight in the range of 1,000 to 3,050,000 g mol$^{-1}$ as determined with gel permeation chromatography,
    (ii) one or more water-absorbing fillers having a water-absorption of 20 wt.% or higher as determined according to the procedure described in standard EN-ISO 10769:2011, wherein the one or more water-absorbing fillers comprise a non-polymeric filler that binds water by chemical reaction, and
    (iii) an antioxidant,

    wherein the composition comprises 30 to 70 wt.% of the amorphous polymer composition based on the total weight of the composition; and wherein the composition comprises

    (a) at least 30 wt.% of the non-polymeric water-absorbing filler, and optionally
    (b) at least 0.1 wt.% of a polymeric water-absorbing filler,

    all based on the total weight of the composition.

2. Composition according to claim 1, wherein the composition comprise

    (a) 30 to 60 wt.% of the non-polymeric water-absorbing filler, and/or
    (b) 0.1 to 10 wt.% of the polymeric water-absorbing filler,

    all based on the total weight of the composition.

3. Composition according to claim 2, wherein the water absorption (g/m2), $w_A$ (g/m2), at 72 h at 23 °C (g/m2) is below about 2000, and wherein $w_A$ (g/m2) is determined by:

    (1) weighing a cup having a known depth in the range of 15 to 25 mm and a surface with a known diameter (round surface) or a known length and width (rectangular or square surface) in the range of 30 to 50 mm, to obtain mass A (g);
    (2) completely filling the plastic cup with said composition, avoiding air entrapments, and smoothing the surface;
    (3) weighing the filled cup to obtain mass B (g);
    (4) placing the filled cup in a container of distilled water maintained at a temperature of 23 ± 1°C, completely submerging the cup;
    (5) placing the cup in a climate cabinet and maintaining the water temperature at 23 ± 1°C for 72 hours;
    (6) taking the cup out of the container after 72 hours, drying its surfaces and weighing the dried cup to obtain mass C (g); and
    (7) calculating the water-absorption (g/m2), expressed in g/m2, as follows:

$$w_A \left( \frac{g}{m^2} \right) = \frac{[(C - A) - (B - A)]}{\text{surface of cup}} * 100\%.$$

4. Composition according to any one of claims 1 to 3, wherein a viscosity of the composition at a shear rate of 2.4 s$^{-1}$ (Pa.s) at 70 °C is between 6000 and 15000, wherein the viscosity is determined according to the procedure described in standard EN-ISO 3219.

5. Composition according to any one of claims 1 to 4, wherein the amorphous polymer is selected from the group consisting of:

   (a) a polymer comprising 50.0 % to 98 % by weight of isobutene and about 2 % to about 50.0 % of a $C_2$ - $C_{12}$ alkene other than isobutene, a $C_4$ - $C_{12}$ alkadiene, or a mixture thereof, based on the total weight of the polymer;
   (b) a polymer comprising more than 98 % to 100 % by weight of isobutene, based on the total weight of the polymer;
   (c) a polymer comprising 50.0 % to 99.9 % by weight of propene and 0.1 % to 50.0 % of a $C_2$ - $C_{12}$ alkene other than propene, a $C_4$ - $C_{12}$ alkadiene, or a mixture thereof, or 100 wt.% propene, based on the total weight of the polymer;
   (d) a polymer comprising 0.1 % to 50.0 % by weight of ethene and 50.0 % to 99.9 % of a $C_2$ - $C_{12}$ alkene other than ethene, a $C_4$ - $C_{12}$ alkadiene, or a mixture thereof, based on the total weight of the polymer;
   (e) a polymer comprising 0.1 % to 50.0 % by weight of 2-methyl-1-pentene and 50.0 % to 99.9 % of a $C_2$ - $C_{12}$ alkene other than 2-methyl-1-pentene, a $C_4$ - $C_{12}$ alkadiene, or a mixture thereof, or 100 wt.% 2-methyl-1-pentene, based on the total weight of the polymer; and
   (f) mixtures of (a), (b), (c), (d) and/or (e).

6. Composition according to claim 5, wherein the amorphous polymer is selected from the group consisting of (a) and (b), and a mixture thereof.

7. Composition according to any one of claims 1 to 6, wherein the non-polymeric water-absorbing filler comprises a cement and a clay mineral, preferably wherein the clay mineral is a kaolinite or kaolin.

8. Composition according to any of of claims 1 to 7, wherein the polymeric water-absorbing filler comprises polyacrylamides, preferably polymethylacrylate.

9. Tape, comprising a layer comprising the corrosion protecting composition according to any one of claims 1 to 8.

10. Article, comprising:

    (a)

        (i) a layer of a corrosion protecting composition according to any one of claims 1 to 8 on a surface of the article; and
        (ii) a mechanical protective layer to protect said layer of said corrosion protecting composition; or

    (b) the tape according to claim 9.

11. Process for the protection against corrosion of an article, comprising, in the following order, the steps of:

    (a) application of a layer of the corrosion protecting composition according to any one of claims 1 to 8 or the tape according to claim 9; and
    (b) application of a mechanical protective layer on top of the layer of said corrosion protecting composition or said tape.

    wherein the article is in a dry, moist, wet, immersed and submerged environment during the application of the layer of the corrosion protecting composition according to anyone of claims 1 to 8 or the tape according to claim 9.

12. Process according to claim 11, wherein the application of the composition according to any one of claims 1 to 8 or the tape according to claim 9 is in a dry, moist, wet, immersed and submerged environment.

**13.** Process according to claim 11 or 12, wherein the operating temperature range is between -50 °C and +100 °C.

**Patentansprüche**

**1.** Zusammensetzung zum Korrosionsschutz eines Artikels, wobei die Zusammensetzung umfasst:

(i) eine amorphe Polymerzusammensetzung, umfassend ein amorphes Polymer, das eine Glasübergangstemperatur von -20 °C oder weniger aufweist, bestimmt durch dynamische Differenzkalorimetrie (DSC), und wobei das amorphe Polymer ein durchschnittliches Molekulargewicht im Bereich von 1.000 bis 3.050.000 g mol$^{-1}$ aufweist, bestimmt mit Gelpermeationschromatographie,
(ii) ein oder mehrere wasserabsorbierende Füllstoffe, die eine Wasserabsorption von 20 Gew.-% oder höher aufweisen, bestimmt nach dem in der Norm EN-ISO 10769:2011 beschriebenen Verfahren, wobei der eine oder die mehreren wasserabsorbierenden Füllstoffe einen nicht-polymeren Füllstoff umfassen, der Wasser durch chemische Reaktion bindet, und
(iii) ein Antioxidans,

wobei die Zusammensetzung 30 bis 70 Gew.-% der amorphen Polymerzusammensetzung, bezogen auf das Gesamtgewicht der Zusammensetzung, umfasst; und wobei die Zusammensetzung

(a) mindestens 30 Gew.-% des nicht-polymeren wasserabsorbierenden Füllstoffs, und optional
(b) mindestens 0,1 Gew.-% eines polymeren wasserabsorbierenden Füllstoffs,

alles bezogen auf das Gesamtgewicht der Zusammensetzung, umfasst.

**2.** Zusammensetzung nach Anspruch 1, wobei die Zusammensetzung

(a) 30 bis 60 Gew.-% des nicht-polymeren wasserabsorbierenden Füllstoffs, und/oder
(b) 0,1 bis 10 Gew.-% des polymeren wasserabsorbierenden Füllstoffs,

alles bezogen auf das Gesamtgewicht der Zusammensetzung, umfasst.

**3.** Zusammensetzung nach Anspruch 2, wobei die Wasserabsorption (g/m$^2$), $W_A$ (g/m$^2$) nach 72 h bei 23 °C (g/m$^2$) unter etwa 2000 liegt, und wobei $W_A$ (g/m$^2$) bestimmt wird durch:

(1) Wiegen eines Bechers, der eine bekannte Tiefe im Bereich von 15 bis 25 mm und eine Oberfläche mit einem bekannten Durchmesser (runde Oberfläche) oder einer bekannten Länge und Breite (rechteckige oder quadratische Oberfläche) im Bereich von 30 bis 50 mm aufweist, um Masse A (g) zu erhalten;
(2) vollständiges Füllen des Plastikbechers mit der Zusammensetzung, Vermeiden von Lufteinschlüssen, und Glätten der Oberfläche;
(3) Wiegen des gefüllten Bechers, um Masse B (g) zu erhalten;
(4) Platzieren des gefüllten Bechers in einen Behälter mit destilliertem Wasser, der auf einer Temperatur von 23 ± 1 °C gehalten wird, und vollständiges Eintauchen des Bechers;
(5) Platzieren des Bechers in einem Klimaschrank und Halten der Wassertemperatur auf 23 ± 1 °C für 72 Stunden;
(6) Herausnehmen des Bechers aus dem Behälter nach 72 Stunden, Trocknen seiner Oberflächen und Wiegen des getrockneten Bechers, um Masse C (g) zu erhalten; und
(7) Berechnen der Wasserabsorption (g/m$^2$), ausgedrückt in g/m$^2$, wie folgt:

$$w_A \left(\frac{g}{m^2}\right) = \frac{[(C - A) - (B - A)]}{Becheroberfläche} * 100\%.$$

**4.** Zusammensetzung nach einem der Ansprüche 1 bis 3, wobei eine Viskosität der Zusammensetzung bei einer Schergeschwindigkeit von 2,4 s$^{-1}$ (Pa·s) bei 70 °C zwischen 6000 und 15000 liegt, wobei die Viskosität nach dem in der Norm EN-ISO 3219 beschriebenen Verfahren bestimmt wird.

**5.** Zusammensetzung nach einem der Ansprüche 1 bis 4, wobei das amorphe Polymer ausgewählt ist aus der Gruppe, bestehend aus

(a) einem Polymer, umfassend 50,0 bis 98 Gew.-% Isobuten und etwa 2 % bis etwa 50,0 % eines $C_2$-$C_{12}$ Alkens außer Isobuten, eines $C_4$-$C_{12}$ Alkadiens oder einer Mischung davon, bezogen auf das Gesamtgewicht des Polymers;
(b) einem Polymer, umfassend mehr als 98 bis 100 Gew.-% Isobuten, bezogen auf das Gesamtgewicht des Polymers;
(c) einem Polymer, umfassend 50,0 bis 99,9 Gew.-% Propen und 0,1 % bis 50,0 % eines $C_2$-$C_{12}$ Alkens außer Propen, eines $C_4$-$C_{12}$ Alkadiens oder einer Mischung davon, oder 100 Gew.-% Propen, bezogen auf das Gesamtgewicht des Polymers;
(d) einem Polymer, umfassend 0,1 bis 50,0 Gew.-% Ethen und 50,0 % bis 99,9 % eines $C_2$-$C_{12}$ Alkens außer Ethen, eines $C_4$-$C_{12}$ Alkadiens oder einer Mischung davon, bezogen auf das Gesamtgewicht des Polymers;
(e) einem Polymer, umfassend 0,1 bis 50,0 Gew.-% 2-Methyl-1-penten und 50,0 % bis 99,9 % eines $C_2$-$C_{12}$ Alkens außer 2-Methyl-1-penten, eines $C_4$-$C_{12}$ Alkadiens oder einer Mischung davon, oder 100 Gew.-% 2-Methyl-1-penten, bezogen auf das Gesamtgewicht des Polymers; und
(f) Mischungen aus (a), (b), (c), (d) und/oder (e).

6. Zusammensetzung nach Anspruch 5, wobei das amorphe Polymer ausgewählt ist aus der Gruppe bestehend aus (a) und (b) und einer Mischung davon.

7. Zusammensetzung nach einem der Ansprüche 1 bis 6, wobei der nicht-polymere wasserabsorbierende Füllstoff einen Zement und ein Tonmineral umfasst, wobei vorzugsweise das Tonmineral ein Kaolinit oder Kaolin ist.

8. Zusammensetzung nach einem der Ansprüche 1 bis 7, wobei der polymere wasserabsorbierende Füllstoff Polyacrylamide, vorzugsweise Polymethylacrylat, umfasst.

9. Band, umfassend eine Schicht umfassend die Korrosionsschutzzusammensetzung nach einem der Ansprüche 1 bis 8.

10. Artikel, umfassend:

(a)

(i) eine Schicht einer Korrosionsschutzzusammensetzung nach einem der Ansprüche 1 bis 8 auf einer Oberfläche des Artikels; und
(ii) eine mechanische Schutzschicht zum Schützen der Schicht der Korrosionsschutzzusammensetzung; oder

(b) das Band nach Anspruch 9.

11. Verfahren zum Korrosionsschutz eines Artikels, umfassend, in der folgenden Reihenfolge, die Schritte:

(a) Aufbringung einer Schicht der Korrosionsschutzzusammensetzung nach einem der Ansprüche 1 bis 8 oder des Bandes nach Anspruch 9; und
(b) Aufbringung einer mechanischen Schutzschicht oben auf der Schicht der Korrosionsschutzzusammensetzung oder des Bandes,

wobei sich der Artikel während der Aufbringung der Schicht der Korrosionsschutzzusammensetzung nach einem der Ansprüche 1 bis 8 oder des Bandes nach Anspruch 9 in einer trockenen, feuchten, nassen, getränkten und eingetauchten Umgebung befindet.

12. Verfahren nach Anspruch 11, wobei die Aufbringung der Zusammensetzung nach einem der Ansprüche 1 bis 8 oder des Bandes nach Anspruch 9 in einer trockenen, feuchten, nassen, untergetauchten und eingetauchten Umgebung erfolgt.

13. Verfahren nach Anspruch 11 oder 12, wobei der Betriebstemperaturbereich zwischen -50 °C und +100 °C liegt.

**Revendications**

1. Composition pour la protection contre la corrosion d'un article, ladite composition comprenant :

   (i) une composition de polymère amorphe comprenant un polymère amorphe présentant une température de transition vitreuse de -20 °C ou moins telle que déterminée par calorimétrie différentielle à balayage (DSC) et dans laquelle le polymère amorphe présente un poids moléculaire moyen dans la plage de 1 000 à 3 050 000 g mol$^{-1}$ tel que déterminé par chromatographie par perméation de gel,
   (ii) une ou plusieurs charges absorbant l'eau présentant une absorption d'eau de 20 % en poids ou plus telle que déterminée selon la procédure décrite dans la norme EN-ISO 10769:2011, dans laquelle les une ou plusieurs charges absorbant l'eau comprennent une charge non polymère qui se lie à l'eau par réaction chimique, et
   (iii) un antioxydant,

   dans laquelle la composition comprend de 30 à 70 % en poids de la composition de polymère amorphe sur la base du poids total de la composition ; et dans laquelle la composition comprend

   (a) au moins 30 % en poids de la charge non polymère absorbant l'eau, et facultativement
   (b) au moins 0,1 % en poids d'une charge polymère absorbant l'eau,

   tous sur la base du poids total de la composition.

2. Composition selon la revendication 1, dans laquelle la composition comprend

   (a) 30 à 60 % en poids de la charge non polymère absorbant l'eau, et/ou
   (b) 0,1 à 10 % en poids de la charge polymère absorbant l'eau,

   tous sur la base du poids total de la composition.

3. Composition selon la revendication 2, dans laquelle l'absorption d'eau (g/m$^2$), $W_A$ (g/m$^2$), à 72 h à 23 °C (g/m$^2$) est inférieure à environ 2 000, et dans laquelle $W_A$ (g/m$^2$) est déterminé par :

   (1) un pesage d'une coupelle présentant une profondeur connue dans la plage de 15 à 25 mm et une surface avec un diamètre connu (surface ronde) ou une longueur et une largeur connues (surface rectangulaire ou carrée) dans la plage de 30 à 50 mm, pour obtenir une masse A (g) ;
   (2) un remplissage complet de la coupelle en plastique avec ladite composition, en évitant des piégeages d'air, et en lissant la surface ;
   (3) un pesage de la coupelle remplie pour obtenir une masse B (g) ;
   (4) un placement de la coupelle remplie dans un récipient d'eau distillée maintenue à une température de 23 ± 1 °C, en immergeant complètement la coupelle ;
   (5) un placement de la coupelle dans une armoire climatique et un maintien de la température de l'eau à 23 ± 1 °C pendant 72 heures ;
   (6) une extraction de la coupelle hors du récipient après 72 heures, un séchage de ses surfaces et un pesage de la coupelle séchée pour obtenir une masse C (g) ; et
   (7) un calcul de l'absorption d'eau (g/m2), exprimée en g/m2, comme suit :

$$w_A \left(\frac{g}{m^2}\right) = \frac{[(C - A) - (B - A)]}{\text{surface de la coupelle}} * 100\%.$$

4. Composition selon l'une quelconque des revendications 1 à 3, dans laquelle une viscosité de la composition à une vitesse de cisaillement de 2,4 s$^{-1}$ (Pa·s) à 70 °C est entre 6 000 et 15 000, dans laquelle la viscosité est déterminée selon la procédure décrite dans la norme EN-ISO 3219.

5. Composition selon l'une quelconque des revendications 1 à 4, dans laquelle le polymère amorphe est sélectionné parmi le groupe constitué de

   (a) un polymère comprenant de 50,0 % à 98 % en poids d'isobutène et environ 2 % à environ 50,0 % d'un

alcène en $C_2$-$C_{12}$ autre que l'isobutène, un alcadiène en $C_4$-$C_{12}$, ou un mélange de ceux-ci, sur la base du poids total du polymère ;

(b) un polymère comprenant plus de 98 % à 100 % en poids d'isobutène, sur la base du poids total du polymère ;

(c) un polymère comprenant de 50,0 % à 99,9 % en poids de propène et de 0,1 % à 50,0 % d'un alcène en $C_2$-$C_{12}$ autre que le propène, un alcadiène en $C_4$-$C_{12}$, ou un mélange de ceux-ci, ou 100 % en poids de propène, sur la base du poids total du polymère ;

(d) un polymère comprenant de 0,1 % à 50,0 % en poids d'éthène et de 50,0 % à 99,9 % d'un alcène en $C_2$-$C_{12}$ autre que l'éthène, un alcadiène en $C_4$-$C_{12}$, ou un mélange de ceux-ci, sur la base du poids total du polymère ;

(e) un polymère comprenant de 0,1 % à 50,0 % en poids de 2-méthyl-1-pentène et de 50,0 % à 99,9 % d'un alcène en $C_2$-$C_{12}$ autre que le 2-méthyl-1-pentène, un alcadiène en $C_4$-$C_{12}$ ou un mélange de ceux-ci, ou 100 % en poids de 2-méthyl-1-pentène, sur la base du poids total du polymère ; et

(f) des mélanges de (a), (b), (c), (d) et/ou (e).

6.  Composition selon la revendication 5, dans laquelle le polymère amorphe est sélectionné parmi le groupe constitué de (a) et (b), et d'un mélange de ceux-ci.

7.  Composition selon l'une quelconque des revendications 1 à 6, dans laquelle la charge non polymère absorbant l'eau comprend un ciment et un minéral argileux, de préférence dans laquelle le minéral argileux est une kaolinite ou du kaolin.

8.  Composition selon l'une quelconque des revendications 1 à 7, dans laquelle la charge polymère absorbant l'eau comprend des polyacrylamides, de préférence du polyméthylacrylate.

9.  Bande, comprenant une couche comprenant la composition de protection contre la corrosion selon l'une quelconque des revendications 1 à 8.

10. Article, comprenant :

    (a)

       (i) une couche d'une composition de protection contre la corrosion selon l'une quelconque des revendications 1 à 8 sur une surface de l'article ; et
       (ii) une couche de protection mécanique pour protéger ladite couche de ladite composition de protection contre la corrosion ; ou

    (b) la bande selon la revendication 9.

11. Procédé de protection contre la corrosion d'un article, comprenant, dans l'ordre suivant, les étapes :

    (a) d'application d'une couche de la composition de protection contre la corrosion selon l'une quelconque des revendications 1 à 8 ou de la bande selon la revendication 9 ; et
    (b) d'application d'une couche de protection mécanique au-dessus de la couche de ladite composition de protection contre la corrosion ou de ladite bande.

    dans lequel l'article est dans un environnement sec, humide, mouillé, immergé et submergé pendant l'application de la couche de la composition de protection contre la corrosion selon l'une quelconque des revendications 1 à 8 ou de la bande selon la revendication 9.

12. Procédé selon la revendication 11, dans lequel l'application de la composition selon l'une quelconque des revendications 1 à 8 ou de la bande selon la revendication 9 est dans un environnement sec, humide, mouillé, immergé et submergé.

13. Procédé selon la revendication 11 ou la revendication 12, dans lequel la plage de température de fonctionnement est entre -50 °C et +100 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4892410 A
- US 5049005 A
- US 5226751 A
- US 5591265 A
- EP 1644433 A
- EP 0751198 A
- EP 0826817 A
- US 4558875 A

- US 5663230 A
- EP 2872554 A
- WO 2014011051 A
- EP 1022316 A
- EP 0300638 A2
- WO 2005005528 A
- US 5817413 A
- US 6033776 A

**Non-patent literature cited in the description**

- **ULLMANNS.** Encyklopädie der technischen Chemie. 1980, vol. 19, 216-223
- **ULLMANN.** Encyklopädie der technischen Chemie. 1977, vol. 13, 621-623
- **S. WU.** *J. Colloid. Interface. Sci.,* 1969, vol. 31, 153
- **D.G. LEGRAND ; G.L. GAINES, JR.** *J. Colloid. Interface Sci.,* 1969, vol. 31, 162
- **KIRK-OTHMER.** Encyclopedia of Chemical Technology. 1993, vol. 8, 905-1093
- **KIRK-OTHMER.** Encyclopedia of Chemical Technology. 1994, vol. 9, 1-37
- Polymer Handbook. 1989
- **J. BOURDARIAT ; R. ISNARD ; J. ODIN.** *J. Polym. Sci., Polym. Phys. Ed.,* 1973, vol. 11, 1817-1828

- **R.W. WARFIELD ; R. BROWN.** *J. Polym. Sci.,* 1967, vol. A-2 5, 791
- **U. GAUR ; B. WUNDERLICH.** *J. Phys. Chem. Ref. Data,* 1981, vol. 10, 1052-1063
- The Polymer Handbook. 1989
- **HAIYANG GAO ; XIAOFANG LIU ; YING TANG ; JIN PAN ; QING WU.** *Polym. Chem.,* 2011, vol. 2 (6), 1398-1403
- **F.L. BUCHHOLTZ ; A.T. GRAHAM.** Modern Superabsorbent Polymer Technology. Wiley VCH, 1998, 71-103
- **KIRK-OTHMER.** Encyclopedia of Chemical Technology. John Wiley & Sons, 1993, vol. 6, 383-423
- *CHEMICAL ABSTRACTS,* 123-28-4
- Corrosion Control of Steel-Fixed Offshore Platforms Associated with Petroleum Production. NACE Standard RP 0176-03. NACE International, 2003